# EUROPÄISCHE PATENTSCHRIFT

(11) **EP 2 606 257 B1**
(45) Veröffentlichungstag und Bekanntmachung des Hinweises auf die Patenterteilung: **13.04.2016**
(21) Anmeldenummer: 11797179.6
(22) Anmeldetag: 16.08.2011
(51) Int. Cl.: F16H 15/42, F16H 61/664

(54) **KEGELREIBRINGGETRIEBE UND VERFAHREN FÜR EIN KEGELREIBRINGGETRIEBE**
BEVEL FRICTION RING GEAR MECHANISM, AND METHOD FOR A BEVEL FRICTION RING GEAR MECHANISM
TRANSMISSION À CÔNES ET BAGUES DE FRICTION ET PROCÉDÉ CORRESPONDANT

(30) Priorität: 18.01.2011 DE 102011008863; 16.08.2010 DE 102010034502
(43) Veröffentlichungstag der Anmeldung: 26.06.2013
(73) Patentinhaber: Rohs, Ulrich, 52351 Düren (DE)
(72) Erfinder: DRÄGER, Christoph, 52379 Langerwehe (DE); BRANDWITTE, Werner, 52379 Langerwehe (DE)
(74) Vertreter: Reuther, Martin
(86) Internationale Anmeldenummer: PCT/DE2011/001597
(87) Internationale Veröffentlichungsnummer: WO 2012/022303

(56) Entgegenhaltungen:
- EP-A1- 1 777 441
- WO-A1-2004/063598
- JP-A- 2000 291 759
- US-A- 1 709 346
- US-A- 5 885 185
- US-A1- 2002 142 883

## Beschreibung

Die Erfindung betrifft ein Kegelreibringgetriebe, bestehend aus wenigstens zwei als Kegelreibringgetriebe ausgeführten Teilgetrieben, und ein Verfahren für ein Kegelreibringgetriebe mit wenigstens zwei als Kegelreibringgetriebe ausgeführten Teilgetrieben.

Ein derartiges Getriebe ist aus der gattungsgemäßen US 1,709,346 bekannt, wobei bei diesen Anordnungen ein zentraler Kegel angetrieben wird, welcher mit einem oder mehreren achsparallelen zu den Eingangskegeln entgegengerichteten, mit über dem Kegelmantel mit konstantem Abstand zum Eingangskegel angeordneten, Ausgangskegeln über jeweils einen Reibring wechselwirkt. Die Reibringe sind über ein gemeinsames Gestell entlang der jeweiligen Spalte verlagerbar, so dass zwischen dem Eingangskegel und dem Ausgangskegel stufenlos ein Übersetzungsverhältnis einstellbar ist. Die jeweiligen Abtriebe der Abtriebskegel sind mit den Planeten eines Planetengetriebes verbunden, so dass ein durch den Eingangskegel aufgebrachtes Drehmoment auf die jeweiligen Abtriebskegel aufgeteilt und über das Planetengetriebe wieder aufsummiert wird, wobei durch die Kopplung der Planeten eine konstante Drehzahl der Planeten sowie der Abtriebskegel erzwungen wird. Diese Anordnung birgt jedoch das Problem, dass bereits kleinste Fertigungstoleranzen bzw. -ungenauigkeiten zu Reibungsverlusten zwischen den Reibringen und den Kegeln führen.

Aus der JP 2000-291759 ist eine weitere Ausführung eines stufenlos einstellbaren Getriebes bekannt, in welchem die Reibringe nicht über ein gemeinsames Gestell entlang eines Spaltes geführt werden. Vielmehr verfügt jeder Reibring eines jeden Teilgetriebes über eine voneinander mechanisch unabhängige Verstelleinrichtung, die eine gemeinsame Regeleinrichtung gesteuert werden können.

Eine Alternative, bekannt aus der WO 2004/063598 A1, schlägt vor, die jeweiligen Abtriebskegel zweier stufenlos einstellbarer, paralleler Teilgetriebe mittels eines Überlagerungsgetriebes am Abtrieb zusammenzuführen. Über die leistungsverzweigte Zusammenführung der Abtriebswellen entfällt die Notwendigkeit den durch Fertigungstoleranzen bzw. -ungenauigkeiten auftretenden Schlupf zwischen einem Eingangs- und einem Ausgangskegel auszugleichen, da ein in dieser Form ausgeführtes Summengetriebe Drehzahlunterschiede zwischen den jeweiligen Teilgetrieben erlaubt. Nachteil einer solchen Ausführungsform ist allerdings, dass die erhöhte Komplexität des Gesamtgetriebes und die erhöhte Anzahl der Reibpaarungen in den nachgeschalteten Überlagerungsgetrieben sowohl die Fertigungs-, Montage- und Wartungskosten als auch die Ausfallwahrscheinlichkeit und den Verlust an Wirkungsgrad erhöhen.

Es ist daher Aufgabe vorliegender Erfindung, ein gattungsgemäßes stufenlos einstellbares Getriebe bereitzustellen, welches auch höhere Drehmomente betriebssicher unter geringem Leistungsverlust und mit einem geringen bzw. kostengünstigen Bauaufwand übertragen kann. Diese Aufgabe wird durch Kegelreibringgetriebe nach dem Anspruch 1 sowie durch ein Verfahren nach Anspruch 6 gelöst. Vorteilhafte Ausgestaltungen finden sich in den Unteransprüchen.

Insbesondere kann ein sich Kegelreibringgetriebe mit wenigstens zwei als Kegelreibringgetriebe ausgeführten Teilgetrieben, welche eine erste Verstelleinrichtung für einen Reibring des ersten Teilgetriebes und eine zweite Verstelleinrichtung für einen Reibring des zweiten Teilgetriebes aufweisen, wobei das Kegelreibringgetriebe eine Regeleinrichtung für eine Regelung einer axialen Position der Reibringe aufweist, dadurch auszeichnen, dass die Regeleinrichtung wenigstens eine erste Teilregeleinrichtung mit einer ersten Führungsgröße und eine zweite Teilregeleinrichtung mit einer von der ersten Führungsgröße separaten zweiten Führungsgröße aufweist, wobei das erste Teilgetriebe die erste Teilregeleinrichtung für die Regelung der Position des Reibringes des ersten Teilgetriebes aufweist und das zweite Teilgetriebe wenigstens die zweite Teilregeleinrichtung für die Regelung der Position des Reibringes des zweiten Teilgetriebes aufweist.

Die Verwendung einer Regelung mittels einer zweiten Teilregeleinrichtung und einer von der ersten Führungsgröße separaten zweiten Führungsgröße hat den Vorteil, dass eine von Fertigungstoleranzen bzw. -ungenauigkeiten unabhängige Regelung der Position des Reibringes des zweiten Teilgetriebes erfolgen kann. Eine Regeleinrichtung, welche nach dem Stand der Technik das gewünschte Übersetzungsverhältnis des Getriebes durch eine für beide Teilgetriebe identische Stellgröße bereitstellt, kann nicht in der Lage sein, das Verschleißverhalten in den beiden Teilgetrieben gezielt zu berücksichtigen, da die erzwungene Drehzahlgleichheit beider Teilgetriebe zu erhöhtem Schlupf in mindestens einem der Teilgetriebe führen kann bzw. wegen der unvermeidlichen Fertigungstoleranzen zwingend zu einem erhöhten bzw. undefiniertem Schlupf führt. Erst durch eine von der ersten Teilregeleinrichtung unabhängige Regelung der Reibringes des zweiten Teilgetriebes können Drehzahlunterschiede zwischen den Reibringen der beiden Teilgetriebe ausgeglichen werden, so dass die Kraftübertragung in den beiden Teilgetrieben möglichst mit geringem Schlupf bzw. genau definiertem zwischen den jeweiligen Reibringen und den durch diese Reibringe wirkverbundenen Kegeln erfolgt.

Denkbar ist auch, dass eine Regeleinrichtung innerhalb eines an sich ohnehin vorhandenen Motor- oder Getriebesteuergerätes realisiert ist, welches sämtliche bzw. die meisten relevanten Steuer- und Regelvorgänge in modernen Kraftfahrzeugen übernimmt. Insofern versteht es sich, dass - insbesondere auch in Abgrenzung zu der JP 2000-291759 - ein derartiges ohnehin vorhandenes Motor- oder Getriebesteuergerät durch eine Einbindung in den vorstehend beschriebenen Regelkreis regelnd wirksam werden kann.

Nach einer bevorzugten Ausgestaltung vorliegender Erfindung kann die Übersetzung des ersten Teilgetriebes durch eine erste Teilregeleinrichtung geregelt werden, welche einer Regeleinrichtung nach dem Stand der Technik entspricht, wobei beispielsweise die Führungsgröße ein durch ein Kennfeld vorgegebenes Übersetzungsverhältnis oder ein durch ein Steuergerät anderweitig vorgegebenes Übersetzungsverhältnis ist.

Um den Vorteil drehzahlsynchroner Reibringe besonders einfach und betriebssicher umzusetzen, wird vorgeschlagen, dass eine Regelgröße der ersten Teilregeleinrichtung eine Führungsgröße der zweiten Teilregeleinrichtung ist.

Eine nach diesem Aspekt der Erfindung verwendete Regelgröße des ersten Teilgetriebes kann beispielsweise die Drehzahl des Reibringes des ersten Teilgetriebes oder der Drehzahlschlupf am Reibring des ersten Teilgetriebes oder ein über das erste Teilgetriebe übertragenes Drehmoment sein. Die verwendete Regelgröße des ersten Teilgetriebes wird folglich derart mit der zweiten Teilregeleinrichtung verknüpft, dass die Regelgröße des ersten Teilgetriebes eine Führungsgröße der zweiten Teilregeleinrichtung ist und eine Regelgröße der zweiten Teilregeleinrichtung gleicher Art vom Werte her der Regelgröße der ersten Teilregeleinrichtung auf einen entsprechenden Wert geregelt wird.

Alternativ oder kumulativ hierzu kann die Führungsgröße der ersten Teilregeleinrichtung auch eine Führungsgröße der zweiten Teilregeleinrichtung sein.

Eine durch ein Steuergerät vorgegebene Führungsgröße, beispielsweise eine Getriebeübersetzung oder eine Position eines Reibringes des ersten Teilgetriebes aber auch eine Winkelstellung des ersten Reibringes, kann demnach ebenfalls für die Regelung der Position eines Reibringes des zweiten Teilgetriebes verwendet werden.

Dies hat den Vorteil, dass die Regelung eines Reibringes des zweiten Teilgetriebes bei hohen erforderlichen Verstellgeschwindigkeiten der Regelung eines Reibringes des ersten Teilgetriebes mit ausreichend hoher Genauigkeit oder Geschwindigkeit folgen kann, da das Einregeln der Regelgröße des zweiten Teilgetriebes über die Führungsgröße des ersten Teilgetriebes als Vorregelung verwendet werden kann und die zweite Teilregeleinrichtung ggf. die Position des Reibringes des zweiten Teilgetriebes lediglich um einen kleinen Betrag relativ zur vorgegebenen Position nachregeln muss, wenn die zweite Führungsgröße des zweiten Teilgetriebes entsprechende Abweichungen bedingt.

Diese Art der Regelung der Position eines Reibringes des zweiten Teilgetriebes unter gleichzeitiger Verwendung der Führungsgröße des ersten Teilgetriebes und einer von dieser Führungsgröße separaten zweiten Führungsgröße erlaubt es, die Position eines Reibringes des zweiten Teilgetriebes synchron zur Position eines Reibringes des ersten Teilgetriebes einzustellen und gegebenenfalls vorhandene Fertigungstoleranzen oder -ungenauigkeiten durch die Korrektur der Position eines Reibringes des zweiten Teilgetriebes über die zweite Teilregeleinrichtung auszugleichen.

Alternativ oder kumulativ ist auch eine Getriebesteuerung vorstellbar, mittels welcher das erste Teilgetriebe und das zweite Teilgetriebe über die Führungsgröße des ersten Teilgetriebes geregelt werden und bei welchem die Korrektur eines an den Reibringen unterschiedlich hohen Schlupfwertes über eine Korrektur der Position des Reibringes des zweiten Teilgetriebes erfolgt, in dem als Führungsgröße für die zweite Teilregeleinrichtung ein Position-Offset-Kennfeld verwendet wird.

Als Position-Offset-Kennfeld kann hierbei ein Datensatz verwendet werden, welcher beispielsweise nach der Montage eines entsprechenden Kegelreibringgetriebes und vor der Inbetriebnahme des genannten Kegelreibringgetriebes durch Vermessung desjenigen beispielsweise an einem Prüfstand eingefahren wird. Ein nach dieser Methode ermitteltes Kennfeld kann beispielsweise ein zweidimensionales Diagramm sein, in welchem zu jeder angefahrenen axialen Position des Reibringes des zweiten Teilgetriebes eine Korrekturgröße abgelegt wird, welche den Betrag der notwendigen axialen Verschiebung des Reibringes des zweiten Teilgetriebes zu der durch die Führungsgröße der ersten Teilregeleinrichtung eingestellten Position erforderlich ist. Ein solches Position-Offset-Kennfeld kann alternativ oder kumulativ auch während des Betriebes durch das vorhandene Getriebesteuergerät selbst erfasst oder verändert werden, sofern eine Einrichtung zur Erfassung des an den Reibringen anliegenden Schlupfes vorhanden ist und die hierdurch ermittelten Werte in geeigneter Weise ausgewertet werden. Es versteht sich, dass ein solches Position-Offset-Kennfeld auch auf verschiedene andere Weisen entsprechend bereitgestellt werden kann.

Um die vorgenannten Vorteile umzusetzen, wird daher im Rahmen einer bevorzugten Alternative vorgeschlagen, dass die Führungsgröße der zweiten Teilregeleinrichtung eine über ein Position-Offset-Kennfeld korrigierte Führungsgröße der ersten Teilregeleinrichtung ist.

Auf diese Weise kann der Regelungsvorgang während des normalen Betriebs erheblich vereinfacht und beschleunigt bzw. mit weniger Rechenleistung durch geführt werden.

Eine voneinander unabhängige bzw. teilunabhängige Regelung von Reibringen zweier Teilgetriebe erfordert ferner vorzugsweise, dass die verschiedenen Reibringe keinen kinematischen Einfluss aufeinander ausüben. Wenn die verschiedenen Teilgetriebe einen gemeinsamen Kegel und jeweils einen weiteren Kegel aufweisen, und die Reibringe jeweils den gemeinsamen Kegel und den weiteren Kegel eines Teilgetriebes miteinander wirkverbinden, ist es vorteilhaft, insbesondere wenn alle Reibringe Gleichteile und somit konstruktiv identisch sind, dass jeder Reibring eines Teilgetriebes den weiteren Kegel dieses Teilgetriebes umschließt.

Für eine Ausführungsform mit zwei Teilgetrieben wird daher vorzugsweise vorgeschlagen, dass das erste Teilgetriebe und das zweite Teilgetriebe einen gemeinsamen Kegel und jeweils einen weiteren Kegel aufweisen, der Reibring des ersten Teilgetriebes lediglich den weiteren Kegel des ersten Teilgetriebes umschließt und der Reibring des zweiten Teilgetriebes lediglich den weiteren Kegel des zweiten Teilgetriebes umschließt.

Um weitere Symmetrieeigenschaften vorteilhaft auszunutzen und die über beide Teilgetriebe übertragene Leistung zu gleichen Teilen aufzuteilen und wieder zusammenzuführen, wird vorgeschlagen, die Leistungs-, Kraft bzw. Drehmomentaufteilung bzw. -zusammenführung an den verschiedenen Teilgetrieben bzw. an den weiteren Kegeln der verschiedenen Teilgetriebe derart zu gestalten, dass die Kegel über einen Rädertrieb auf eine gemeinsame Welle geführt werden, wobei die einzelnen Zahnradpaarungen der jeweiligen Teilgetriebe ein identisches Übersetzungsverhältnis aufweisen. Es wird daher vorgeschlagen, dass der weitere Kegel des ersten Teilgetriebes mittels eines ersten Getriebes, insbesondere eines Zahnradgetriebes, mit einer Welle wirkverbunden ist und der weitere Kegel des zweiten Teilgetriebes mittels eines zweiten Getriebes, insbesondere eines Zahnradgetriebes, ebenfalls mit dieser Welle wirkverbunden ist, wobei das erste und das zweite Getriebe ein identisches Übersetzungsverhältnis aufweisen.

Es versteht sich, dass eine derartige Anordnung ebenfalls für ein Kegelreibringgetriebe mit mehr als zwei Teilgetrieben vorstellbar ist, wobei jedes weitere Teilgetriebe eine für dieses Teilgetriebe vorgesehene und von der ersten Regeleinrichtung unabhängige Regeleinrichtung aufweist.

Nach einem weiteren Aspekt der Erfindung ist es im Rahmen der oben genannten Aufgabe gewünscht, dass die an den Kegeln erforderliche Anpresskraft durch Verwendung einer möglichst kostengünstigen Einrichtung aufzubringen. Beispielsweise kann eine Einrichtung zur Aufbringung einer Anpresskraft an dem gemeinsamen Kegel vorgesehen sein, statt zwei verschiedene Einrichtungen zur Aufbringung der Anpresskraft an zwei oder mehreren weiteren Kegeln vorzusehen. Dies hat den Vorteil, dass ein kostengünstiges Getriebe mit einer relativ einfachen Regelung der Anpresskraft durch eine einzelne Einheit realisierbar ist.

Um diesen Vorteil umzusetzen, wird daher insbesondere vorgeschlagen, ein aus wenigstens zwei als Kegelreibringgetriebe ausgeführten Teilgetrieben bestehendes Kegelreibringgetriebe bereitzustellen, bei welchem die Teilgetriebe jeweils einen Eingangskegel und einen gemeinsamen Ausgangskegel aufweisen und welches sich dadurch auszeichnet, dass der gemeinsame Ausgangskegel eine Anpresseinrichtung aufweist. Eine derartige Anordnung ermöglicht es insbesondere präzise und baulich einfach die Anpresseinrichtung auf die unterschiedlichen Betriebszustände abzustimmen.

Nach einem weiteren Aspekt der Erfindung ist es alternativ zu einer einzelnen Anpresseinrichtung für einen gemeinsamen Kegel auch möglich, mehrere Anpresseinrichtungen für die weiteren Kegel zu verwenden. Um einen Vorteil gegenüber einer einzelnen Anpresseinrichtung zu erzielen, besteht bei solch einer Anordnung die Möglichkeit Anpresskräfte an Kegeln verschiedener Teilgetriebe vom Betrage her gleichzuhalten. Ein Ausgleich von unterschiedlichen Anpresskräften kann hierbei beispielsweise durch geeignet gekoppelte Anpresseinrichtungen erfolgen.

Um diesen Vorteil umzusetzen, wird ein aus wenigstens einem ersten als Kegelreibringgetriebe ausgeführten Teilgetriebe und einem zweiten als Kegelreibringgetriebe ausgeführten Teilgetriebe bestehendes Kegelreibringgetriebe vorgeschlagen, welches sich dadurch auszeichnet, dass wenigstens zwei Kegel aus verschiedenen Teilgetrieben jeweils eine Anpresseinrichtung aufweisen, wobei die beiden Anpresseinrichtungen eine Einrichtung zum Ausgleich eines Unterschiedes der Anpresskräfte aufweisen.

Ein nach diesem Aspekt der Erfindung ausgeführter Kräfteausgleich kann hierbei vorteilhaft mittels einer Waage umgesetzt werden, wobei diese Waage eine hydraulische Waage oder eine mechanische Waage sein kann.

Eine hydraulisch wirkende Waage zwischen zwei Anpresseinrichtungen kann beispielsweise derart ausgestaltet sein, dass zwei mit Öl befüllte Druckkammern der Anpresseinrichtung mittels eines Leitungssystems derart untereinander verbunden sind, dass ein hydraulischer Druckausgleich zwischen den Anpresseinrichtungen erfolgt.

Es wird dementsprechend vorgeschlagen, dass der Kräfteausgleich hydraulisch erfolgt.

Eine alternative, mechanisch wirkende Waage kann beispielsweise durch eine geschickte Anordnung von Hebeln, wobei vorzugsweise zwei gleichlange und entgegengesetzte wirkverbundene Hebel nach dem Balkenwagenprinzip Kräfte zwischen zwei Anpresseinrichtungen ausgleichen, ausgeführt werden. Auch kann ein derartiger Ausgleich beispielsweise mittels Seilzügen oder ähnlicher Anordnungen erfolgen. Insofern kann der Kräfteausgleich mechanisch auch erfolgen.

Ferner bietet der Einsatz eines Kräfteausgleiches alternative Möglichkeiten eine Anpresskraft über die Anpresseinrichtung aufzubringen. Die Verwendung zweier entkoppelter Anpresseinrichtungen erfordert im Gegensatz hierzu auch eine getrennte Aufbringung der Anpresskräfte. Die vorstehend beschriebene Kopplung zweier Anpresseinrichtungen ermöglicht es daher, die erforderlichen Anpresskräfte durch eine einzelne für beide Anpresseinrichtungen gemeinsame Einrichtung aufzubringen.

So besteht bei Einsatz eines hydraulischen Kräfteausgleiches lediglich das Erfordernis eine einzelne Einrichtung zur Aufbringung der Anpresskraft, wie etwa eine Pumpe, einzusetzen.

Für einen mechanischen, nach dem Balkenwaagenprinzip wirkenden Kräfteausgleich, bietet sich ebenfalls eine geschickte Anordnung von Einrichtungen zur Aufbringung einer Anpresskraft, wie etwa eines Federnpaketes, an, wobei ein solches Federnpaket oder eine anderweitige Einrichtung zur Aufbringung einer Anpresskraft lediglich entweder in einer Anpresseinrichtung vorgesehen sein muss oder aber am Drehpunkt des Hebelmechanismus des mechanischen Kräfteausgleiches vorgesehen sein kann.

Eine zuvor vorgeschlagene Möglichkeit eine zweite Teilregeleinrichtung für ein zweites Teilgetriebe zu verwenden, besteht darin, als Regelgröße einer Regelstrecke eine Drehzahl eines Reibringes zu nutzen. Es wird daher vorgeschlagen, ein aus wenigstens einem Eingangskegel und einem Ausgangskegel und einem zwischen dem Eingangskegel und dem Ausgangskegel angeordneten, wenigstens einen Kegel umschließenden Reibring bestehendes Kegelreibringgetriebe bereitzustellen, welches sich durch eine Einrichtung zur Messung der Drehzahl des Reibringes auszeichnet.

Mit Messung der Drehzahl des Reibringes ist hierbei eine direkte Messung der tatsächlich vorliegenden physikalischen Drehzahl des Reibringes gemeint. Es wird daher vorgeschlagen, dass die Einrichtung zur Messung der Drehzahl des Reibringes vorzugsweise die Drehzahl des Reibringes unmittelbar am Reibring, vorzugsweise durch eine auf den Reibring wirkende Sensorik, erfasst. Hierbei wird unter einer "direkten Messung der Drehzahl" eine Messung der Drehzahl verstanden, welche nicht durch Baugruppen erfolgt, die von einem Hauptdrehmoment, welches das entsprechende Teilgetriebe durchläuft und dem Drehmoment, welches auf dem jeweiligen Eingangskegel des jeweiligen Teilgetriebes lastet, entspricht, belastet sind. Beispielsweise kann die Messung durch eine unmittelbar an dem Reibring ansetzende Sensorik, beispielsweise durch eine induktive Messung oder durch eine optische Messung, wenn der Reibring entsprechende Einrichtungen, wie beispielsweise entsprechende Zähne oder Ausnehmungen, aufweist, vorgenommen werden. Andererseits kann beispielsweise über eine Reibringführung und die unmittelbar am Reibring angreifenden Führungsräder eine entsprechende Messung durchgeführt werden.

Alternativ ist auch eine indirekte Ermittlung der Drehzahl des Reibringes vorstellbar, bei welcher die Drehzahl der durch den Reibring wirkverbundenen Kegel erfasst und die physikalische Drehzahl des Reibringes über physikalische und/oder mathematische Modelle erfasst wird. Hierbei ist es jedoch sehr schwierig, einen Schlupf, der möglicherweise zum Ausgangskegel anders als zu Eingangskegel auftritt, in diese Modelle mit einzubeziehen.

Dadurch, dass der Reibring in seiner axialen Position frei beweglich ist, ist es anderenfalls dann in der Regel erforderlich, für eine direkte Messung der Drehzahl des Reibringes eine Messeinrichtung ebenfalls axial verlagerbar anzuordnen, so dass die Messeinrichtung relativ zum Reibring eine nicht veränderliche Position einnimmt. Es wird daher eine mit dem Reibring axial verlagerbare Führungseinrichtung vorgeschlagen, an welcher die Messeinrichtung angeordnet ist.

Alternativ zur Regelung der axialen Position der Reibringe mittels der Drehzahl der Reibringe kann beispielsweise auch eine Regelung mittels des Schlupfes der Reibringe erfolgen. Zur Bestimmung eines Schlupfes an einem Reibring bzw. an einem Reibkegel ist es allerdings vorteilhaft, neben der Drehzahl eines Reibringes wenigstens eine weitere Drehzahl eines der durch den Reibring wirkverbundenen Kegel zu kennen. Um dies umzusetzen, kann das Kegelreibringgetriebe neben der Einrichtung zur Messung der Drehzahl des Reibringes eine Einrichtung zur Messung der Drehzahl wenigstens eines Kegels aufweisen.

In diesem Zusammenhang versteht es sich, dass ein Kegelreibringgetriebe mit einer Einrichtung zur Messung der Drehzahl des Reibringes, insbesondere wenn dieses die Drehzahl unmittelbar am Reibring erfasst, sowie ein Kegelreibringgetriebe mit einer Einrichtung zur Messung der Drehzahl wenigstens eines der Kegel auch unabhängig von den übrigen Merkmalen vorliegender Erfindung entsprechend vorteilhaft ist.

Ebenso kann als Regelgröße für ein Kegelreibringgetriebe, insbesondere als Regelgröße für eine zweite Teilregeleinrichtung eines zweiten Teilgetriebes also für ein zwei Kegelreibringgetriebe umfassendes Gesamtgetriebe, auch ein Drehmoment genutzt werden. Dementsprechend ist unabhängig von den übrigen Merkmalen vorliegender Erfindung ein Kegelreibringgetriebe bestehend aus wenigstens einem Eingangskegel und einem Ausgangskegel und einem zwischen dem Eingangskegel und dem Ausgangskegel angeordneten, wenigstens einen Kegel umschließenden Reibring vorteilhaft, welches sich durch eine Drehmomentmesseinrichtung auszeichnet.

Umfasst die Drehmomentmesseinrichtung eine berührungslose Datenübertragung, so lassen sich Einflüsse der Drehmomentmesseinrichtung auf das Kegelreibringgetriebe selbst minimieren. ebenso lässt sich der Verschleiß auf ein Minimum begrenzen. Als berührungslose Datenübertragung kommen insbesondere eine optische und/oder eine induktive Datenübertragung in Frage. Ebenso können die rotierenden und Energie benötigenden Baugruppen der Drehmomentmesseinrichtung berührungslos, z.B. optisch oder induktiv, mit Energie versorgt werden.

In vorliegendem Zusammenhang umfasst der Begriff der Datenübertragung sämtlich Daten oder Messwerte, seien sie analog oder digital, welche eine Aussage über das Drehmoment treffen bzw. die in einer Proportionalität zum anliegenden Drehmoment stehen. So können diese bereits digitalisierte Messwerte sein, die von den rotierenden Baugruppen der Drehmomentmesseinrichtung auf feststehende Baugruppen übertragen werden sollen. Ebenso können diese Messsignale sein, die noch einer Nachbearbeitung bedürfen.

Vorzugsweise umfasst die Drehmomentmesseinrichtung eine Kegelwelle, also eine Welle, welche mit einem der Kegel als Antriebswelle oder Abtriebswelle verbunden ist. Insbesondere kann die Drehmomentmesseinrichtung eine Baugruppe aufweisen, die einstückig mit dem Kegel verbunden ist. Ebenso können die messenden Baugruppen starr und höchstens biegeelastisch mit dem Kegel verbunden sein, so dass die Drehmomentmesseinrichtung zwar an- und demontiert werden kann, jedoch das an dem Kegelreibringgetriebe bzw. an dem entsprechenden Kegel anliegende Drehmoment möglich unmittelbar gemessen werden kann.

Vorzugsweise ist sowohl am Eingangskegel als auch am Ausgangskegel eine entsprechende Drehmomentmesseinrichtung vorgesehen, wobei sich durch die Differenz der Drehmomente auch eine Aussage über den Schlupf des Reibringes treffen lässt.

Auch kann sich entsprechend vorteilhaft alternativ bzw. kumulativ zu den vorstehenden Merkmalen ein Kegelreibringgetriebe bestehend aus wenigstens einem Eingangskegel sowie einem Ausgangskegel und einem zwischen dem Eingangskegel sowie dem Ausgangskegel angeordneten, wenigstens einen Kegel umschließenden Reibring vorgeschlagen, dadurch auszeichnen, dass zwischen einer Eingangswelle des Kegelreibringgetriebes und dem Eingangskegel ein Drehmomentwandler angeordnet ist. Insbesondere kann dieser Drehmomentwandler für ein Kegelreibringgetriebe derart genutzt werden, dass der Eingangskegel ein niedrigeres Drehmoment als die Eingangswelle aufweist. Vorteilhaft wird hierdurch ein Kegelreibringgetriebe zur Verfügung gestellt, welches durch die eingangsseitige Drehmomentwandlung eine wesentlich höhere Antriebsleistung übertragen kann. Dies ist begründet in den Eigenschaften eines Kegelreibringgetriebes, welches lediglich kraftschlüssig, also über Reibung, Drehmomente überträgt und somit ein maximal übertragbares Drehmoment aufweist. Die Wandlung dieses Drehmomentes in ein niedrigeres Drehmoment bei gleichzeitiger Erhöhung der Drehzahl am Eingangskegels führt, wie sofort ersichtlich, zu der vorstehend beschriebenen Erhöhung der maximal übertragbaren Leistung, wenn nunmehr das beispielsweise doppelte des ursprünglichen Drehmomentes in ein Getriebe mit unveränderter Dimensionierung eingeleitet wird.

In einer besonders vorteilhaften Ausgestaltung kann der Eingangskegel annähernd ein halbes Drehmoment der Eingangswelle aufweisen. Es wird folglich eine Drehmoment- und Drehzahlübersetzung mit einem Übersetzungsverhältnis von etwa i = 0,5 realisiert. Es hat sich herausgestellt, dass konstruktiv dieses Übersetzungsverhältnis besonders gut geeignet ist, ein Kegelreibringgetriebe für höhere Drehmomente bereitzustellen ohne Nachteile, beispielsweise durch höhere Reibung, in Kauf nehmen zu müssen.

In einer weiteren besonders vorteilhaften Ausgestaltung und um zusätzliche Reibung am Kegelreibringgetriebe minimal zu halten, kann der Drehmomentwandler ein Zahnradgetriebe umfassen. Darüber hinaus ist ein Zahnradgetriebe besonders kostengünstig herzustellen, wodurch die sich ergebenden Vorteile nicht bzw. unwesentlich durch höhere Kosten aufgezehrt werden.

Für ein Kegelreibringgetriebe mit einem Zahnradgetriebe als Drehmomentwandler ist es weiterhin vorteilhaft, wenn ein eingangsseitiges Zahnrad des Zahnradgetriebes eine geradzahlige Zähnezahl und ein ausgangsseitiges Zahnrad des Zahnradgetriebes eine ungeradzahlige Zähnezahl aufweist. Diese Ausgestaltung kann auch entsprechend umgekehrt vorteilhaft für ein Kegelreibringgetriebe sein, indem das eingangsseitige Zahnrad des Zahnradgetriebes eine ungeradzahlige Zähnezahl und das ausgangsseitige Zahnrad des Zahnradgetriebes eine geradzahlige Zähnezahl aufweist. Die Paarung zweier Zahnräder mit jeweils einer geradzahligen und einer ungeradzahligen Zähnezahl führt dazu, dass nach einem Umlauf des jeweiligen Zahnrades ein Zahn zunächst mit einem unterschiedlichen Zahn des gegenüberliegenden Zahnrades in Eingriff kommt. So wird verhindert, dass ein Zahn eines Zahnrades ausschließlich mit ein und demselben Zahn des gegenüberliegenden Zahnrades in Eingriff kommt und somit möglicherweise ein ungleichmäßiger Verschleiß an den Zahnrädern bewirkt wird.

In diesem Zusammenhang ist es sofort ersichtlich, dass der Begriff "annähernd" in Zusammenhang mit dem halben Drehmoment der Eingangswelle darauf abzielt, dass ein Zahnrad der Eingangswelle die doppelte Zähnezahl des Zahnrades des Eingangskegels abzüglich oder zuzüglich eines Zahnes aufweist.

Auch kann sich ein Verfahren für ein Kegelreibringgetriebe bzw. zum Betrieb eines Kegelreibringgetriebes bestehend aus wenigstens einem Eingangskegel sowie einem Ausgangskegel und einem zwischen dem Eingangskegel sowie dem Ausgangskegel angeordneten, wenigstens einen Kegel umschließenden Reibring, dadurch auszeichnen, dass ein Drehmoment des Eingangskegels im Bezug auf eine Eingangswelle des Kegelreibringgetriebes in ein niedrigeres Drehmoment gewandelt wird. Es wird somit, wie bereits vorstehend erläutert, durch den eingesetzten Drehmomentwandler vor dem Kegelreibringgetriebe bzw. vor dem Eingangskegel des Kegelreibringgetriebes das eingehende Drehmoment bei gleichzeitiger Erhöhung der Drehzahl in dem Maße verringert, dass eine wesentlich höhere Leistung durch das Kegelreibringgetriebe übertragen werden kann.

Zusätzlich zu dem vorstehend erläuterten Verfahren kann das Drehmoment des Eingangskegels annähernd auf das halbe Drehmoment der Eingangswelle, unter Nutzung der bereits vorstehend erläuterten Vorteile, gewandelt werden.

Es versteht sich, dass die Merkmale zu einer Drehmomentwandlung zwischen der Eingangswelle und dem Eingangskegel auch unabhängig von den übrigen Merkmalen der Erfindung vorteilhaft für ein Kegelreibringgetriebe sind.

Entsprechend vorteilhaft ist auch ein Verfahren für ein Kegelreibringgetriebe mit wenigstens zwei als Kegelreibringgetriebe ausgeführten Teilgetrieben, welche eine erste Verstelleinrichtung für einen Reibring des ersten Teilgetriebes und eine zweite Verstelleinrichtung für einen Reibring des zweiten Teilgetriebes aufweisen, wobei eine axiale Position der Reibringe über eine Regeleinrichtung geregelt wird und sich das Kegelreibringgetriebe dadurch auszeichnet, dass die Regeleinrichtung wenigstens eine erste Teilregeleinrichtung mit einer ersten Führungsgröße und eine zweite Teilregeleinrichtung mit einer von der ersten Führungsgröße separaten zweiten Führungsgröße aufweist, wobei die Position des Reibringes des ersten Teilgetriebes über die erste Teilregeleinrichtung und die Position des Reibringes des zweiten Teilgetriebes über die zweite Teilregeleinrichtung geregelt wird.

Ein nach diesem Verfahren geregeltes Kegelreibringgetriebe kann beispielsweise in seiner Gesamtübersetzung entsprechend des Standes der Technik über eine von einem Getriebesteuergerät, welches die erste Teilregeleinrichtung beinhaltet, geregelt werden, wobei die erste Teilregeleinrichtung ihre Führungsgröße über das Getriebesteuergerät selbst oder über ein vorhandenes Motorsteuergerät erhält. Die von der ersten Teilregeleinrichtung ausgegebene Stellgröße wird zur Regelung der axialen Position eines Reibringes wenigstens des ersten Teilgetriebes, aber auch für die Regelung eines Reibringes jedes weiteren vorhandenen Teilgetriebes, insbesondere für die Regelung des Reibringes des zweiten Teilgetriebes, verwendet.

Eine am ersten Teilgetriebe erfasste Regelgröße kann an die zweite Teilregeleinrichtung zurückgegeben werden, wodurch die zweite Teilregeleinrichtung ihrerseits eine zweite Stellgröße für eine Verstelleinrichtung eines Reibringes des zweiten Teilgetriebes ausgibt. Als Regelgröße der ersten Regelstrecke, also des ersten Teilgetriebes, kann eine beliebige Drehzahl, beispielsweise die Drehzahl des Reibringes, die Drehzahl eines im Teilgetriebe befindlichen Reibkegels, ein am Reibring anliegender Schlupf oder aber auch ein durch das Teilgetriebe übertragenes Drehmoment verwendet werden. Die durch die zweite Teilregeleinrichtung ausgegebene Stellgröße kann dann zusammen mit der durch die erste Teilregeleinrichtung ausgegebenen Stellgröße durch Überlagerung dieser zum Regeln der axialen Position des Reibringes der zweiten Teilgetriebes verwendet werden.

Die Überlagerung erfolgt hierbei vorzugsweise derart, dass durch die erste Stellgröße die axiale Position des Reibringes der zweiten Teilregeleinrichtung eingestellt wird, so dass sie der axialen Position des Reibringes des ersten Teilgetriebes entspricht bzw. dieser äquivalent ist und dass die die erste Stellgröße überlagernde zweite Stellgröße den Reibring des zweiten Teilgetriebes nur geringfügig in seiner Position derart nachregelt, dass durch diese relative geringfügige Positionsänderung des Reibringes des zweiten Teilgetriebes die Regelgrößen des ersten Teilgetriebes und des zweiten Teilgetriebes denselben Wert erreichen, also die Regelabweichung der zweiten Regelgröße der als zweite Führungsgröße verwendeten ersten Regelgröße gegen Null geht. Selbstverständlich kann mittels der Stellgröße der zweiten Teilregeleinrichtung die Position des Reibringes des zweiten Teilgetriebes nicht nur geringfügig geregelt werden sondern auch derart, dass auf die erste Teilregeleinrichtung zur Positionierung des Reibringes des zweiten Teilgetriebes verzichtet werden kann und die Regelung der Position dessen lediglich über die zweite Teilregeleinrichtung erfolgt.

Um ein Kegelreibringgetriebe nach einem weiteren Aspekt vorliegender Erfindung entsprechend der vorstehend genannten Aufgabe zu verbessern, kann ein Verfahren für ein Kegelreibringgetriebe mit wenigstens zwei als Kegelreibringgetriebe ausgeführten Teilgetrieben, welches eine erste Verstelleinrichtung für einen Reibring des ersten Teilgetriebes und eine zweite Verstelleinrichtung für einen Reibring des zweiten Teilgetriebes aufweist, wobei eine axiale Position der Reibringe über eine Regeleinrichtung geregelt wird, sich dadurch auszeichnen, dass die Regeleinrichtung wenigstens eine erste Teilregeleinrichtung mit einer ersten Führungsgröße und eine zweite Teilregeleinrichtung mit einer von der ersten Führungsgröße abhängigen zweiten Führungsgröße aufweist, wobei die zweite Führungsgröße über eine Korrektur der ersten Führungsgröße über ein Position-Offset-Kennfeld und das Position-Offset-Kennfeld durch eine Kalibriermessung von Abweichungen der axialen Position des ersten und des zweiten Reibringes erzeugt wird.

Ein nach diesem Verfahren betriebenes Kegelreibringgetriebe setzt voraus, dass das verwendete Position-Offset-Kennfeld entweder bereits vorhanden ist oder während des Betriebes des Kegelreibringgetriebes aufgenommen wird.

Zur Erzeugung eines Position-Offset-Kennfeldes, welches zum Betrieb der Regeleinrichtung bereits im Steuergerät des Getriebes abgelegt worden ist, kann ein nach der Montage an einem Prüfstand durchgeführtes Prüf- und Einlaufprogramm zum Erfassen des Position-Offset-Kennfeldes vorteilhaft genutzt werden. Die Fertigungstoleranzen und -ungenauigkeiten werden hierbei beispielsweise durch am Prüfstand vorhandene Messinstrumente erfasst und dauerhaft im Steuergerät des Kegelreibringgetriebes abgelegt, wodurch zusätzliche Sensorik zur Erfassung der zur Regelung benötigten Regelgrößen verzichtet werden kann. Das Position-Offset-Kennfeld besteht bei dieser Prüfstandkalibrierung beispielsweise aus einer durch die erste Regeleinrichtung vorgegebenen Position des Reibringes des ersten Teilgetriebes und einer dazu korrelierenden Positionsabweichung des Reibringes des zweiten Teilgetriebes. Aus dieser Positionsabweichung wird eine entsprechende Korrekturgröße für die erste Stellgröße ermittelt und das korrigierte Signal als zweite Stellgröße durch die zweite Teilregeleinrichtung ausgegeben.

Es versteht sich, dass ist das Erzeugen eines Datensatzes für ein Position-Offset-Kennfeld nicht auf einen Prüfstandlauf vor Inbetriebnahme des Kegelreibringgetriebes begrenzt ist, da durch ein im Fahrzeug vorhandenes Getriebesteuergerät und eine geeignete Sensorik am Kegelreibringgetriebe ein Kalibriervorgang auch während des Betriebes möglich ist. Einem Steuergerät kann nach diesem Verfahren beispielsweise eine Lernfunktion implementiert werden, durch welche das Position-Offset-Kennfeld stetig dem aktuellen Verschleißzustand des Kegelreibringgetriebes angepasst wird.

Alternativ bzw. kumulativ zu den voranstehenden Ausgestaltungen der Erfindung kann, um die eingangsstehende Aufgabe zu lösen, sich ein Kegelreibringgetriebe bestehend aus einem ersten als Kegelreibringgetriebe ausgeführten Teilgetriebe und einem zweiten als Kegelreibringgetriebe ausgeführten Teilgetriebe, bei welchem die beiden Teilgetriebe einen gemeinsamen Kegel aufweisen und das erste Teilgetriebe einen ersten weiteren Kegel sowie das zweite Teilgetriebe einen zweiten weiteren Kegel aufweist, wobei die Rotationsachsen des gemeinsamen Kegels sowie der beiden weiteren Kegel in einer Achsenebene angeordnet sind und wobei wenigstens der gemeinsame Kegel ein wellenseitiges Reibkegel-Lager sowie ein absatzseitiges Reibkegel-Lager aufweist, dadurch auszeichnen, dass das wellenseitige Reibkegel-Lager und/oder das absatzseitige Reibkegel-Lager einen Translationsfreiheitsgrad entlang der Achsenebene aufweist. Wird in einem Kegelreibringgetriebe eine Anpresseinrichtung lediglich für den gemeinsamen Kegel vorgesehen, kann durch die vorstehend vorgeschlagene Ausgestaltung besonders vorteilhaft das durch die beiden Teilgetriebe übertragene Drehmoment besonders gleichmäßig auf beide Teilgetriebe verteilt werden. Insbesondere werden durch diese Ausgestaltung die an den Reibkontakten der beiden Teilgetriebe entstehenden Reib- und Anpresskräfte gleichmäßig auf beide Teilgetriebe verteilt. Es ist an dieser Stelle auch denkbar, dass die Ausgestaltung eines beliebigen oder beider Reibkegel-Lager mit einem Translationsfreiheitsgrad entlang der Achsenebene auch bei einem Kegelreibringgetriebe mit zwei Anpresseinheiten vorteilhaft ist, wobei die Anpresseinheiten in den beiden weiteren Kegeln vorgesehen sind. Insbesondere ist die vorstehend erläuterte Anordnung vorteilhaft, wenn in den weiteren Kegeln lediglich eine Anpresseinheit vorgesehen ist.

Hierbei versteht es sich, dass als Reibkegel-Lager insbesondere Wälzlager, ggf. aber auch Gleitlager, zur Anwendung kommen können. Als Wälzlager eignen sich insbesondere 4-Punkt-Lager, sonstige Kugellager oder bei bestimmten Lagern auch Kegelrollenlager, ebenso können Nadellager zur Anwendung kommen.

Zur Übertragung des durch das Kegelreibringgetriebe übertragenen Drehmomentes verfügt ein einzelner Kegel über eine an diesen Kegel angeschlossene Eingangswelle oder aber über eine Ausgangswelle. Der Begriff "wellenseitig" kennzeichnet somit jenes Ende der axialen Erstreckung eines Kegels, welches einer derartigen Eingangs- oder Ausgangswelle zugewandt ist. Dementsprechend bezeichnet der Begriff "absatzseitig" die der entsprechenden Welle abgewandten Seite des Kegels. Sofern für einen etwaigen Nebentrieb eine zweite Ausgangswelle oder aber eine zweite Eingangswelle an einem Kegel vorgesehen ist, ist der Bezugspunkt für die Begriffe "wellenseitig" und "absatzseitig" stets die das Hauptantriebsdrehmoment übertragende Welle. Der Begriff "axial" bezieht sich hierbei stets auf die Rotations- bzw. Symmetrieachse eines Kegels.

Der Begriff "Translationsfreiheitsgrad" bezeichnet die jeweiligen voneinander unabhängigen Bewegungsrichtungen eines Punktes oder eines Körpers im Koordinatensystem. Der hier vorliegenden Erfindung liegen das kartesische Koordinatensystem und somit sechs Freiheitsgrade, drei Translationsfreiheitsgrade und drei Rotationsfreiheitsgrade, zugrunde. Ein entlang der Achsenebene und im Wesentlichen radial zur Rotationsachse des gemeinsamen Kegels verlaufender Translationsfreiheitsgrad beschreibt somit eine Bewegungsrichtung zweier Rotationsachsen aufeinander zu oder voneinander weg bzw. zweier Punkte auf zwei Rotationsachsen, welche sich aufeinander zu bzw. voneinander weg bewegen. Der Begriff "im Wesentlichen" bringt hierbei zum Ausdruck, dass es sich bei der Bewegung eines Reibkegel-Lagers entlang der Achsenebene und radial zu den Rotationsachsen nicht nur um eine translatorische Bewegung eines entsprechenden Lagers in Richtung einer weiteren Rotationsachse handeln muss, wobei sich die Rotationsachse des sich bewegenden Kegels parallel zu der übrigen Rotationsachse bewegt, sondern auch um eine Bewegung der Kegel- bzw. Lagerrotationsachse um einen Drehpunkt auf der Rotationsachse handeln kann. Somit würde sich ein Punkt auf der sich bewegenden Rotationsachse zwar stets lotrecht zu dieser Rotationsachse bewegen, diese Bewegung wäre jedoch nicht lotrecht bzw. radial zu der Rotationsachse, auf welcher sich das jeweilige Lager zu bewegt.

Um einen Biegekraft freien Antrieb oder Abtrieb des gemeinsamen Kegels zu gewährleisten, wenn dieser in der Achsenebene verschoben wird, kann eine Welle des gemeinsamen Kegels wenigstens eine bewegliche, drehstarre Kupplung aufweisen. Eine "bewegliche, drehstarre Kupplung" kann beispielsweise als Kreuzgelenk, als Kugelgleichlaufgelenk, als Bogenzahlkupplung oder als Lamellenkupplung ausgeführt sein. Im Wesentlichen muss die Kupplung einem Winkel und/oder einen Versatz des gemeinsamen Kegels ausgleichen. Dementsprechend kann es auch notwendig sein, zwei bewegliche, drehstarre Kupplungen, wie etwa zwei Kardangelenke, hintereinander anzuordnen, wodurch der an diese Kupplungen angeschlossene Welle insgesamt vier Freiheitsgrade, zwei Rotationsfreiheitsgrade und zwei Translationsfreiheitsgrade, gegeben werden. In Verbindung mit dem vorstehend erwähnten Translationsfreiheitsgrad eines wellenseitigen oder eines absatzseitigen Reibkegel-Lagers ergibt sich somit insgesamt ein Translationsfreiheitsgrad und ein Rotationsfreiheitsgrad für die gesamte Anordnung bzw. des gemeinsamen Kegels. Dieser besagte translatorische Freiheitsgrad des gemeinsamen Kegels ergibt sich, wenn beide Lager, das wellenseitige Reibkegel-Lager und das absatzseitige Reibkegel-Lager, gemeinsam eine Bewegung entlang der Achsenebene ausführen. Eine rotatorische Bewegung des gemeinsamen Kegels ergibt sich, wenn lediglich eins der beiden Lager eine translatorische Bewegung in der Achsenebene ausführt. In diesem Zusammenhang wird auch nochmals der Begriff "im Wesentlichen" deutlich, da ein Reibkegel-Lager sich auf einer Kreisbahn bewegen wird, sofern der gemeinsame Kegel an einem weiteren Reibkegel-Lager unbeweglich eingespannt ist. Für die betrachtete translatorische Bewegung ist allerdings der in so einem Fall dargestellte Winkelbereich derart klein, dass eine Bewegung auf einer Geraden angenähert werden kann.

Obgleich der betrachtete Winkelbereich bei einer rotatorischen Bewegung des gesamten gemeinsamen Kegels betrachtet wird, ist es vorteilhaft für ein Kegelreibringgetriebe, wenn das wellenseitige und das absatzseitige Reibkegel-Lager als Loslager ausgeführt sind. Auf diese Weise können Spannungen aufgrund der Bewegung aber auch Spannungen durch thermische Ausdehnungsprozesse im gemeinsamen Kegel oder in der Welle ausgeglichen werden. Insofern ist es alternativ zu einem wellenseitig und absatzseitig ausgeführtem Loslager ebenfalls vorteilhaft, wenn eines des wellenseitigen oder absatzseitigen Reibkegel-Lagers als ein Loslager und das weitere des wellenseitigen oder des absatzseitigen Reibkegel-Lagers als ein Festlager ausgeführt ist. Insbesondere ist in diesem Zusammenhang vorteilhaft, wenn das Festlager ein winkelbewegliches Lager ist. Ein "winkelbewegliches Lager" kann insbesondere ein Tonnenlager oder ein Pendellager sein, welches einen Winkelversatz der Welle auszugleichen vermag.

Weiterhin vorteilhaft für ein Kegelreibringgetriebe ist es, wenn das wellenseitige und/oder das absatzseitige Reibkegel-Lager eine Lagerführung aufweist. Dies kann insbesondere dann vorteilhaft umgesetzt werden, wenn das Lager lediglich zum Lagern einer rotierenden Achse genutzt wird und fest in der genannten Lagerführung eingespannt ist und die Lagerführung somit für eine translatorische Bewegung in der Achsenebene zuständig ist. Insofern werden die verschiedenen Lagerungsaufgaben auch an verschiedene Baugruppen verteilt.

Weiterhin vorteilhaft für ein Kegelreibringgetriebe, insbesondere im Zusammenhang mit einem in der Achsenebene beweglichen gemeinsamen Kegels, kann es sein, wenn wenigstens ein Reibring des Kegelreibringgetriebes ein dem gemeinsamen Kegel zugewandte Kontaktoberfläche aufweist, wobei die Kontaktoberfläche zu einer Oberfläche des gemeinsamen Kegels zumindest an einer in der Achsenebene liegenden Schnittebene konvex ausgestaltet ist. Diese ballige Ausgestaltung einer Reibringoberfläche begünstigt weiterhin die Schiefstellung bzw. einen Winkelversatz der Rotationsachse des gemeinsamen Kegels insofern, dass stets eine gleiche Kontaktgeometrie zwischen Reibring und gemeinsamen Kegel gewährleistet ist. Würde der Reibring eine ebene Kontaktfläche zum gemeinsamen Kegel aufweisen, wodurch sich eine Kontaktlinie statt eines Kontaktpunktes in diesem Reibkontakt ausbildet, so wie im Übrigen auch in den übrigen Reibkontakten, würde bei einem Winkelversatz des gemeinsamen Kegels die Oberfläche des gemeinsamen Kegels nicht mehr parallel zu der Reibringoberfläche verlaufen, wodurch es zu starken Kantenpressungen an diesem Reibring käme. Eine ballig ausgeführte Oberfläche des Reibringes begegnet dieser Kantenpressung und ermöglicht stets einen gleich ausgeführten Kontaktpunkt zwischen dem Reibring und dem gemeinsamen Kegel.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung anliegender Zeichnung erläutert. In der Zeichnung zeigen:
- Figur 1: ein Kegelreibringgetriebe mit einem ersten Teilgetriebe und einem zweiten Teilgetriebe sowie einem ersten Zahnradgetriebe und einem zweiten Zahnradgetriebe, welche die weiteren Kegel des ersten Teilgetriebes und des zweiten Teilgetriebes mit einer gemeinsamen Welle drehzahlsynchron wirkverbindet;
- Figur 2: ein Kegelreibringgetriebe mit einem ersten Teilgetriebe, mit einem zweiten Teilgetriebe und mit einem ersten leistungsverzweigten Ausgleichsgetriebe, welches die weiteren Kegel des ersten Teilgetriebes und des zweiten Teilgetriebes mit einer gemeinsamen Welle wirkverbindet;
- Figur 3: ein weiteres Kegelreibringgetriebe mit einem ersten Teilgetriebe, mit einem zweiten Teilgetriebe und mit einem zweiten leistungsverzweigten Ausgleichsgetriebe, welches die weiteren Kegel des ersten Teilgetriebes und des zweiten Teilgetriebes mit einer gemeinsamen Welle wirkverbindet;
- Figur 4: ein weiteres Kegekeibringgetriebe mit einem ersten Teilgetriebe, mit einem zweiten Teilgetriebe und mit einem dritten leistungsverzweigten Ausgleichsgetriebe, welches die weiteren Kegel des ersten Teilgetriebes und des zweiten Teilgetriebes mit einer gemeinsamen Welle wirkverbindet;
- Figur 5: ein Kegelreibringgetriebe mit einem ersten Teilgetriebe, mit einem zweiten Teilgetriebe, mit einer ersten Anpresseinheit für einen weiteren Kegel des ersten Teilgetriebes, mit einer zweiten Anpresseinheit für einen weiteren Kegel des zweiten Teilgetriebes und mit einem hydraulischen Kräfteausgleich zwischen der ersten Anpresseinheit sowie der zweiten Anpresseinheit;
- Figur 6: ein Kegelreibringgetriebe mit einem ersten Teilgetriebe, mit einem zweiten Teilgetriebe, mit einer ersten Anpresseinheit für einen weiteren Kegel des ersten Teilgetriebes, mit einer zweiten Anpresseinheit für einen weiteren Kegel des zweiten Teilgetriebes und mit einem mechanischen Kräfteausgleich zwischen der ersten Anpresseinheit sowie der zweiten Anpresseinheit;
- Figur 7: ein Kegelreibringgetriebe mit einem ersten Teilgetriebe, mit einem zweiten Teilgetriebe und mit einer am gemeinsamen Kegel befindlichen gemeinsamen Anpresseinheit;
- Figur 8: ein Kegelreibringgetriebe mit einem ersten Teilgetriebe, mit einem zweiten Teilgetriebe und mit einem in einer Achsenebene frei beweglichen gemeinsamen Kegel, welcher an seiner Welle zwei bewegliche und drehstarre Kupplungen aufweist;
- Figur 9: die Anordnung der in Figur 8 gezeigten Lager und Wellen in Draufsicht;
- Figur 10: ein Kegelreibringgetriebe mit einem ersten Teilgetriebe, mit einem zweiten Teilgetriebe mit einer mechanischen Kopplung zwischen den beiden Getrieben in einer ersten perspektivischen Ansicht bei niedrigem Übersetzungsverhältnis;
- Figur 11: das Kegelreibringgetriebe nach Figur 10 in einer weiteren perspektivischen Ansicht;
- Figur 12: das Kegelreibringgetriebe nach Figuren 10 und 11 in einer perspektivischen Ansicht ähnlich Figur 10 bei hohem Übersetzungsverhältnis;
- Figur 13: das Kegelreibringgetriebe nach Figuren 10 bis 12 in einer perspektivischen Ansicht ähnlich Figur 11 bei hohem Übersetzungsverhältnis;
- Figur 14: das Kegelreibringgetriebe nach Figuren 10 bis 13 in Aufsicht bei hohem Übersetzungsverhältnis; und
- Figur 15: eine schematische Aufsicht auf ein weiteres Kegelreibringgetriebe.

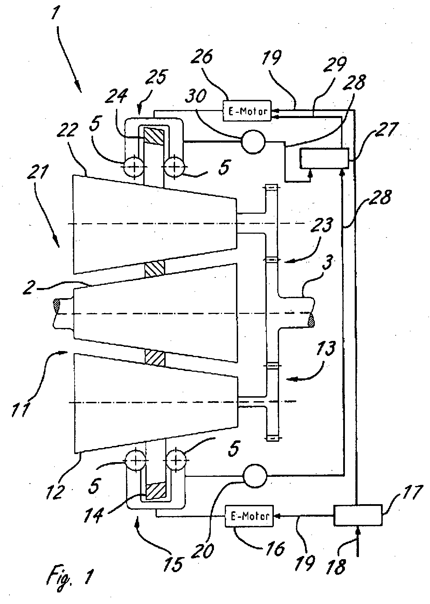

Figur 1 zeigt ein Kegelreibringgetriebe 1 mit einem ersten Teilgetriebe 11 und einem zweiten Teilgetriebe 21 sowie einem ersten Zahnradgetriebe 13 und einem zweiten Zahnradgetriebe 23, welche den weiteren Kegel des ersten Teilgetriebes 12 und den weiteren Kegel des zweiten Teilgetriebes 22 mit einer gemeinsamen Welle 3 drehzahlsynchron wirkverbindet.

Die Krafteinleitung in das Kegelreibringgetriebe 1 erfolgt bei dieser Ausgestaltung über eine Eingangswelle eines gemeinsamen Kegels 2 der beiden Teilgetriebe 11, 21. Die weiteren Kegel 12, 22 leiten die von dem gemeinsamen Kegel 2 an Reibringe 14, 24 weitergegebene Wellenleistung an eine Ausgangswelle, der gemeinsamen Welle 3, weiter. Die Reibringe 14, 24 werden hierbei über Verstelleinrichtungen 15, 25 mit Stellmotoren 16, 26, die über eine Führungsgröße 18 angesteuert werden, axial verstellt.

Die Ausgangswellen der weiteren Kegel 12, 22 sind bei dieser Ausgestaltung zum Weitergegeben der Wellenleistung jeweils über zwei Stirnräder mit einem gemeinsamen auf der gemeinsamen Welle 3 sitzenden Stirnrad verbunden. Die Leistungsübertragung vom gemeinsamen Kegel 2 zur gemeinsamen Welle 3 ist aufgrund dieser beiden Stirnräder derart ausgestaltet, dass die weiteren Kegel 12, 22 der beiden Teilgetriebe 11, 21 stets drehzahlsynchron angetrieben werden und ein Drehzahlunterschied zwischen den weiteren Kegeln 12, 22, bedingt durch eine Abweichung zwischen der axialen Position des Reibringes 14 des ersten Teilgetriebes und der axialen Position des Reibringes 24 des zweiten Teilgetriebes, nicht ausgeglichen werden kann.

Eine Positionsabweichung zwischen den Reibringen 14,24 führt somit auch erzwungenermaßen zu einem Drehzahlunterschied zwischen dem Reibring des ersten Teilgetriebes 14 und dem Reibring des zweiten Teilgetriebes 24, wenngleich dieser Drehzahlunterschied auch einen sehr kleinen Wert erreichen kann bzw. in einem idealisierten, theoretischen Kegelreibringgetriebe nicht vorhanden ist. Ein mit einer verschiedenen Drehzahl betriebener Reibring unterliegt in Folge dessen einem höheren Schlupf an einer an diesem Reibring vorhandenen Reibpaarung, wie etwa der Reibfläche zwischen der radial außerhalb des Reibringes vorliegenden Oberfläche und der Oberfläche des gemeinsamen Kegels 2 oder der radial innerhalb des Reibringes vorliegenden Oberfläche und einer Oberfläche des durch den Reibring mit dem gemeinsamen Kegel wirkverbundenen weiteren Kegels.

Der zweite Stellmotor 26 des zweiten Teilgetriebes 21 verwendet entsprechend dieser Ausführungsform neben der ersten Führungsgröße 18, welche zur Erzeugung einer gemeinsamen Stellgröße 19 zur Regelung beider Verstelleinrichtungen 15, 25 verwendet wird, eine zweite Führungsgröße 28, welche wiederum aus einer Regelgröße des ersten Teilgetriebes 11, hier die Differenz der Drehzahlen des Reibringes des ersten Teilgetriebes 14 und des Reibringes des zweiten Teilgetriebes 24, wobei hier beispielsweise auch die absolute Position des ersten Reibrings 14 oder ähnliches genutzt werden kann, gebildet wird.

Die Verstelleinrichtungen der Reibringe 15, 25 beinhalten zudem jeweils zwei Führungsrädchen 5, welche die Reibringe 14, 24 spielfrei umgreifen, sodass einerseits eine axiale Verstellung der Reibringe 14, 24 verzögerungsfrei erfolgen kann und andererseits die axiale Position der Reibringe 14, 24 in einem stationären Zustand, also bei gleichbleibendem Übersetzungsverhältnis, möglichst stabil gehalten werden kann, damit die Reibringe nicht zusätzlich einem Flattern oder einem axialen Wandern zwischen den Kegeln 2, 12, 22 unterliegen.

Die Messung des Drehzahlunterschiedes zwischen den Reibringen 14, 24 erfolgt über an den Verstelleinrichtungen der Reibringe 15, 25 befindliche Messeinrichtungen 20, 30, wobei diese Messeinrichtungen 20, 30 bei diesem Ausführungsbeispiel aus nicht dargestellten optischen oder induktiven Sensoren bestehen, welche die Reibringdrehzahl durch Kerben oder Ausnehmungen an den Reibringen erkennt.

Die für die Stellmotoren 16, 26 beider Verstelleinrichtungen 15,25 verwendete gemeinsame Stellgröße 19 einer ersten Teilregeleinrichtung 17 wird zur Regelung der axialen Position des Reibringes des zweiten Teilgetriebes 21 der zweiten Stellgröße 29 der zweiten Teilregeleinrichtung 27 überlagert. Die erste Teilregeleinrichtung 17 gibt somit auch für den Reibring des zweiten Teilgetriebes 24 die axiale Position vor, wodurch es ermöglicht wird, dass der Reibring des zweiten Teilgetriebes 24 bei hohen Verstellgeschwindigkeiten nahezu verzögerungsfrei der Position des Reibringes des ersten Teilgetriebes 14 folgen kann. Der Ausgleich einer relativen axialen Fehlpositionierung des Reibringes des zweiten Teilgetriebes 24 erfolgt somit allein über die zweite Teilregeleinrichtung 27, sodass bei diesem Ausführungsbeispiel die zweite Teilregeleinrichtung 27 lediglich für eine relative Positionierung, also relativ zur aktuellen Position des Reibringes des zweiten Teilgetriebes 24 selbst, eingesetzt wird und die erste Teilregeleinrichtung 17 lediglich für eine absolute Positionierung, also in Bezug zu einem kegelfesten Koordinatensystem, des Reibringes des zweiten Teilgetriebes 21 eingesetzt wird.

Denkbar ist auch eine Regelung der axialen Position des Reibringes des zweiten Teilgetriebes 24 durch Einsatz lediglich der zweiten Teilregeleinrichtung 27, ohne dass die erste Stellgröße 19 auf den zweiten Stellmotor 26 der Verstelleinrichtung des Reibringes des zweiten Teilgetriebes 25 wirkt.

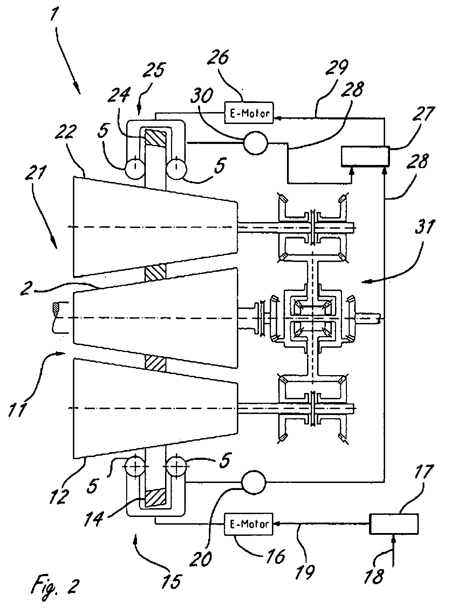

Das in Figur 2 dargestellte Kegelreibringgetriebe 1 mit einem ersten Teilgetriebe 11 und einem zweiten Teilgetriebe 21, wobei das erste Teilgetriebe 11 einen gemeinsamen Kegel 2 und einen weiteren Kegel 12 aufweist und das zweite Teilgetriebe 21 den gemeinsamen Kegel 2 und einen weiteren Kegel 22 aufweist, überträgt ein durch den gemeinsamen Kegel 2 eingeleitetes und über die gemeinsame Welle 3 abgegebenes Drehmoment mittels eines ersten leistungsverzweigten Ausgleichsgetriebes 31. Das leistungsverzweigte Ausgleichsgetriebe 31 besteht aus einem Differentialgetriebe (nicht beziffert), wobei die koaxialen Kegelräder über weitere schaltbare Kegelräder mit den Ausgangswellen der jeweiligen weiteren Kegeln 12, 22 der beiden Teilgetriebe 11, 21 verbunden sind und wobei ein Differentialkorb des Differentialgetriebes mit der gemeinsamen Welle 3 wirkverbunden ist. Ein zusätzliches mit dem Differentialkorb des ersten leistungsverzweigten Ausgleichsgetriebes 31 wirkverbundenes Kegelrad ist ferner schaltbar mit einer Ausgangswelle der gemeinsamen Kegels 2 verbunden, so dass auch ein Direktgang, also eine Kraftübertragung mit Übersetzungsverhältnis i=1 über lediglich ein einzelnes Getriebeglied, ermöglicht wird. Die an den Ausgangswellen der weiteren Kegel 12, 22 befindlichen schaltbaren weiteren Kegelräder ermöglichen mittels der nicht bezifferten Schaltmuffe die Darstellung eines Rückwärtsganges.

Ein derart als Differentialgetriebe ausgestaltetes Ausgleichsgetriebe 31 ist somit in der Lage Drehzahlunterschiede zwischen den Reibringen 14, 24 zuzulassen, indem keine synchrone Drehzahl zwischen dem ersten Teilgetriebe 11 und dem zweiten Teilgetriebe 21 erzwungen wird. Es stellt sich folglich an den Reibringen 14, 24 stets ein Minimum an Schlupf ein, wodurch nun die weiteren Kegel 12, 22 untereinander einen Drehzahlunterschied aufweisen. Diese Drehzahlunterschiede vermag das leistungsverzweigte Getriebe 31 auszugleichen, wodurch wiederum, statt erhöhtem Schlupf an den Reibringen 14, 24, Relativbewegungen in dem Differentialgetriebe des leistungsverzweigten Ausgleichsgetriebes 31 auftreten und diese drehzahlausgleichenden Relativbewegungen durch Reibwärme zur Verringerung des Getriebewirkungsgrades führen. Eine erfindungsgemäße Regelung der axialen Position der Reibringe 14, 24 bewirkt, wegen der Vermeidung dieser erläuterten Relativbewegungen, folglich eine Steigerung des Getriebewirkungsgrades.

Das Kegelreibringgetriebe 1 mit einem Reibring 14 des ersten Teilgetriebes 11, mit einem zu diesem Reibring 14 gehörigen Stellmotor 16 sowie einer Verstelleinrichtung 15, mit einem Reibring 24 des zweiten Teilgetriebes 21 und mit einem dazugehörigen Stellmotor 26 sowie einer Verstelleinrichtung 25 wird bei der in Figur 2 dargestellten alternativen Ausführungsform derart angesteuert, dass lediglich der Stellmotor 20 der Verstelleinrichtung 15 eine Stellgröße 19 zum Regeln der axialen Position des Reibringes des ersten Teilgetriebes 14 von einer ersten Teilregeleinrichtung 17 erhält und die zweite Teilregeleinrichtung 27 den Reibring des zweiten Teilgetriebes 24 über den zweiten Stellmotor 30 sowie die zweite Verstelleinrichtung 25 derart in seiner axialen Position regelt, dass lediglich die zweite Führungsgröße 28 zur Erzeugung der zweiten Stellgröße 29 verwendet wird. In dieser Ausführungsform besteht die Führungsgröße 28 wiederum aus einer von der ersten Regelgrößenerfassung 20 bereitgestellten Regelgröße des ersten Teilgetriebes 11 und einer von der zweiten Regelgrößenerfassung 30 bereitgestellten Regelgröße des zweiten Teilgetriebes 21. Die durch die Teilregeleinrichtung ausgewertete Führungsgröße 28 wird hierbei aus dem Drehzahlunterschied der Reibringe 14, 24 gebildet, wobei hier auch beispielsweise eine axiale Position der ersten Reibrings 14, möglicherweise unter Einbeziehung eines Position-Offset-Kennfeld zur Berücksichtigung einer Kalibriermessung, genutzt werden kann.

In Abweichung zu den in Figur 1 beschriebenen Messvorrichtungen der Regelgrößenerfassungen 20, 30 ist in dieser Ausgestaltung eine Drehzahlmessung der Reibringe an den Führungsrädchen 5 der Verstelleinrichtungen 15, 25 vorgesehen, indem die Drehzahl des Führungsrädchens 5 selbst erfasst wird. Es ist sofort ersichtlich, dass auch zwischen einem Führungsrädchen 5 und einem Reibring Schlupf auftreten und somit die Messung der Drehzahl des Reibringes aus diesem Grund fehlerbehaftet sein kann, was jedoch an sich sehr unwahrscheinlich ist oder nur in äußerst geringem Maße der Fall sein kann, da an dieser Stelle kein Drehmoment übertragen wird und die Führungsrädchen 5 für eine sichere Führung des Reibrings ohnehin sehr genau an diesem anliegen. Dieser an dem Führungsrädchen ermittelten Messgröße kann je nach Erfordernis, je nach Betriebszustand des Kegelreibringgetriebes 1, wie etwa einer Stationärfahrt oder eine Verstellung des Übersetzungsverhältnisses in eine bestimmte Richtung, eine Korrekturgröße überlagert sein. Denkbar ist darüber hinaus auch eine Messung an dem in dieser Ausführungsform verwendeten leistungsverzweigten Ausgleichsgetriebe 31, wobei beispielsweise die Relativdrehzahl zweier Getriebeglieder gemessen werden kann, an welchen sich bei schlupffreiem Betrieb des Kegelreibringgetriebes die Relativdrehzahl bzw. Differenzdrehzahl gerade - wie weiter oben erläutert - zu null ergibt.

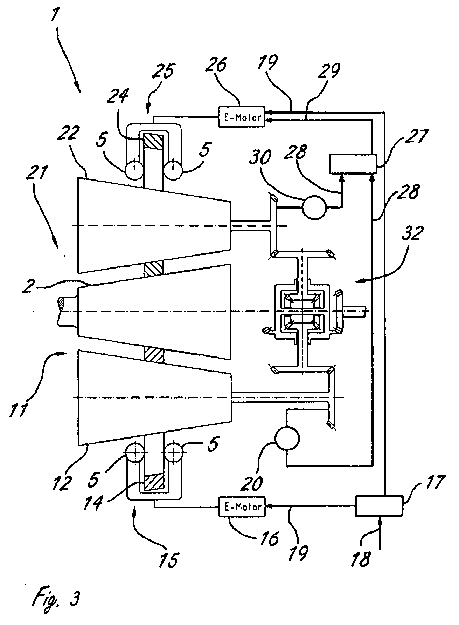

Das in Figur 3 dargestellte Kegelreibringgetriebe mit einem ersten Teilgetriebe 11 und einem zweiten Teilgetriebe 21 weist ein zweites leistungsverzweigtes Ausgleichsgetriebe 32 auf, wobei dieses zweite leistungsverzweigte Ausgleichsgetriebe 32 eine vereinfachte Ausführungsform des ersten leistungsverzweigten Ausgleichsgetriebes 31 nach dem Ausführungsbeispiel aus Figur 2 darstellt. Zwecks Minderung von Reibverlusten und des Montageaufwandes wurde auf mehrere Teilgetriebe und auf einen den gemeinsamen Kegel 2 mit der gemeinsamen Welle 3 wirkverbindenden Direktgang verzichtet, wodurch sich eine weitere Möglichkeit zur Erhöhung des Getriebewirkungsgrades durch Verringerung von Reibverlusten ergibt. Die in diesem Ausführungsbeispiel dargestellte Regelung der axialen Position der Reibringe 14, 24 verwendet wiederum zur Regelung der axialen Position des Reibringes des zweiten Teilgetriebes 24 zwei überlagerte Stellgrößen 19, 29 der beiden Teilregeleinrichtungen 17, 27.

Die zweite Teilregeleinrichtung 27 verwendet zur relativen Positionierung des Reibringes des zweiten Teilgetriebes 24 als Führungsgröße an dieser Stelle statt des Drehzahlunterschiedes der Reibringe 14, 24 den Drehzahlunterschied der weiteren Kegel 12, 22 der beiden Teilgetriebe 11, 21. Die Verwendung des mit Wirkungsgradeinbußen behafteten zweiten Ausgleichsgetriebes 32 ermöglicht in dieser Ausführungsform bevorzugt die Verwendung des Drehzahlunterschiedes der weiteren Kegel 12, 22 zur Erzeugung einer zweiten Stellgröße 19 durch die bereitgestellte Führungsgröße 28, so dass die Bereitstellung der Führungsgröße 28 durch eine einfache, gehäusefeste Regelgrößenerfassung 20, 30 erfolgen kann.

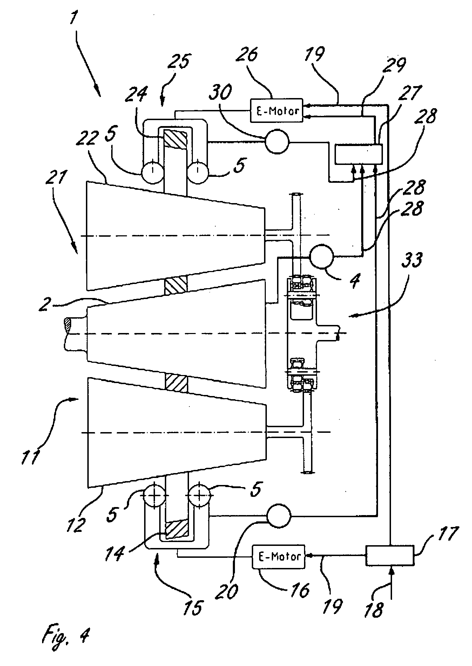

Figur 4 zeigt ein weiteres Ausführungsbeispiel eines Kegelreibringgetriebes 1, wobei ein drittes leistungsverzweigtes Ausgleichsgetriebe 33 Verwendung findet, welches als Planetengetriebe ausgeführt ist und ebenfalls Drehzahl- und Drehmomentunterschiede zwischen dem ersten Teilgetriebe 11 und dem zweiten Teilgetriebe 21 auszugleichen vermag und den Bauraum des Kegelreibringgetriebes 1 in axialer Richtung gegenüber den Ausführungsbeispielen mit dem ersten und zweiten leistungsverzweigten, in den Figuren 2 und 3 dargestellten Ausgleichsgetrieben 31, 32 deutlich verringert. Die in diesem Ausführungsbeispiel dargestellte Teilregeleinrichtung 27 verwendet zur Bereitstellung der zweiten Stellgröße 29 eine zweite Führungsgröße 28, welche aus drei Drehzahlsignalen, der Drehzahlen der Reibringe 14, 24 und der Drehzahl des gemeinsamen Kegels 2, erzeugt wird. Die Verwendung des über den Drehzahlsensor 4 bereitgestellten Drehzahlsignales des gemeinsamen Kegels 2 erlaubt es, über mathematische, physikalische bzw. tribologische Modelle Rückschlüsse auf den in den Reibringen 14, 24 auftretenden Schlupf zu ziehen, so dass statt eines Drehzahlsignales auch dieser ermittelte Schlupf als Führungsgröße 28 zur Regelung der axialen Position des Reibringes des zweiten Teilgetriebes herangezogen werden kann.

Die Verwendung eines Ausgleichsgetriebes, wie etwa des hier verwendeten dritten leistungsverzweigten Ausgleichsgetriebes 33, unterbindet zwar wirksam das Auftreten eines unterschiedlichen Schlupfes an den Reibringen 14, 24, weswegen vorzugsweise eine Verwendung dieser Regelung an drehzahlstarr gekoppelten, weiteren Reibkegeln 12, 22 bevorzugt wird, jedoch ermöglicht vorliegende Regelungsstrategie beispielsweise eine Verwendung einer Differentialsperre in den leistungsverzweigten Ausgleichsgetrieben 31, 32, 33, welches Relativbewegungen im Radsatz der Ausgleichsgetriebe 31, 32, 33 verhindert.

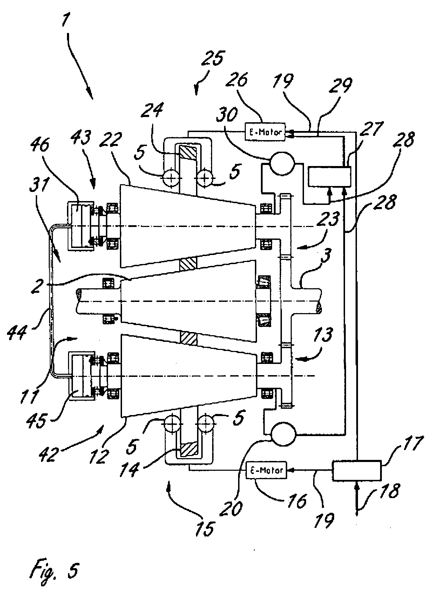

In Figur 5 ist ein erfindungsgemäßes Kegelreibringgetriebe 1 mit einem weiteren Kegel 12 des ersten Teilgetriebes 11, auf welchen eine erste Anpresseinheit 42 wirkt, und einem weiteren Kegel 22 des zweiten Teilgetriebes 21, auf welchen eine zweite Anpresseinheit 43 wirkt, dargestellt.

Dem Erfordernis, in beiden Teilgetrieben 11,21 gleichermaßen wirkende Anpresskräfte zu erzeugen, wird in dieser Ausführungsform durch einen zwischen den Anpresseinheiten 42, 43 angeordneten hydraulischen Ausgleich 44 Rechnung getragen.

Die Verwendung einer erfindungsgemäßen Regeleinrichtung für die axiale Positionierung der Reibringe 14, 24 erfordert bei diesem Ausführungsbeispiel im Wesentlichen gleiche tribologische Bedingungen in den Reibkontakten zwischen den Reibringen 14, 24 und den durch diese Reibringe 14, 24 wirkverbundenen Kegeln 2, 12, 22, insbesondere wenn die zweite Teilregeleinrichtung 27 die axiale Position des Reibringes des zweiten Teilgetriebes 24 über die Messung der Drehzahl der Reibringe 14, 24 oder über die Messung des an den Reibringen anliegenden Schlupfes regelt. Der hydraulische Ausgleich 44 verbindet hierbei eine mit Öl befüllte erste Druckkammer 45 der ersten Anpresseinheit 42 mit einer ebenfalls mit Öl befüllten zweiten Druckkammer 46 der zweiten Anpresseinheit 43. Das in den Anpresseinheiten 42, 43 befindliche Öl kann somit zwischen den Druckkammern 45, 46 hin und her strömen, sodass die Anpresskräfte auf die weiteren Kegel 12, 22 der beiden Teilgetriebe 11, 12 stets denselben Wert annehmen und hierüber die tribologischen Verhältnisse an den Reibkontakten der Reibringe 14, 24 denselben Zustand erreichen.

Die weiteren Kegel 12, 22 sind beidseits mittels Radiallagern gelagert und somit in axialer Richtung frei beweglich. Sämtliche Axialkräfte, wie auch die Ausgleichskräfte der Anpresseinheiten 42, 43 werden durch ein am gemeinsamen Kegel 2 befindlichen Kegelrollenlager abgestützt. Zusätzliche Axiallager zwischen den Anpresseinheiten 42, 43 und den weiteren Kegeln 12, 22 entkoppeln die Drehbewegung der weiteren Kegel 12, 22 von den Anpresseinheiten 42, 43.

Figur 5 zeigt ferner eine alternative Regelstrategie für die zweite Teilregeleinrichtung. Als Führungsgröße 28 wird hierbei die über die Regelgrößenerfassung 20, 30 gemessene Differenz der an den weiteren Kegeln 12, 22 anliegenden Drehmomente verwendet, welche sich durch axiale Fehlstellungen der Reibringe 14, 24 ergibt, da durch Erhöhung des Schlupfes in einem der Reibringe 14, 24 eine Verminderung der übertragenen Leistung erfolgt.

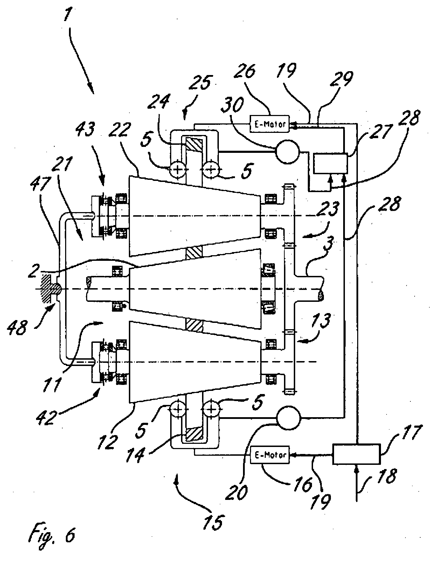

Einen entsprechend wirkenden Kräfteausgleich zwischen der ersten Anpresseinheit 42 und der zweiten Anpresseinheit 43 umfasst die in Figur 6 dargestellte Ausführungsform. In dieser Ausführungsform werden unterschiedliche, auf die weiteren Kegel 12, 22 wirkende Anpresskräfte über einen mechanischen Ausgleich 47 egalisiert. Der mechanische Ausgleich 47 wirkt hierbei über einen zwischen dem ersten Teilgetriebe 11 und dem zweiten Teilgetriebe 21 befindlichen Hebel, welcher in seinem an seiner Symmetrieachse befindlichen Drehpunkt 48 an dem Gehäuse des Kegelreibringgetriebes 1 drehbar gelagert ist, so dass die auf die Anpresseinheiten 42, 43 wirkenden Hebel dieselbe Wirklänge aufweisen und die auf die weiteren Kegel 12, 22 wirkenden Anpresskräfte stets denselben Wert aufweisen.

Das Kegelreibringgetriebe 1 nach Figuren 5 und 6 verfügt weiterhin über einen als Stirnradgetriebe mit einem ersten Zahnradgetriebe 13 und einem zweiten Zahnradgetriebe 23 ausgeführten Drehmomentwandler, um ein Drehmoment der gemeinsamen Welle 3 herabzusetzen bevor dieses Drehmoment in den weiteren Kegel 12 des ersten Teilgetriebes 11 und in den weiteren Kegel 22 des zweiten Teilgetriebes 21 eingeleitet wird. Einhergehend mit der Drehmomentabsenkung wird, wie dies bei Getrieben mit einer festen Getriebeübersetzung üblich ist, die Drehzahl der beiden weiteren Kegel im Verhältnis der Drehmomentabsenkung erhöht.

Im Gegensatz zu einer Ausführung eines Kegelreibringgetriebes 1 mit lediglich einem Eingangskegel und einem Ausgangskegel ist das Kegelreibringgetriebe 1 nach der in Figur 5 dargestellten Ausführungsform nunmehr geeignet, ein Vierfaches des ursprünglichen eingeleiteten Drehmomentes zu übertragen. Die erste Verdopplung des übertragbaren Drehmomentes folgt aus der Verwendung zweier Eingangskegel 12, 22 und hiermit einhergehend zweier Teilgetriebe 11, 21 und der dadurch zweifach vorhandenen Reibkontakte zwischen den Eingangskegeln 12, 22 und dem gemeinsamen Ausgangskegel 2.

Die zweite Verdopplung des übertragbaren Drehmomentes, wodurch das Vierfache Drehmoment übertragen wird, folgt aus der vorstehend erläuterten Halbierung des eingehenden Drehmomentes unter Verdopplung der Drehzahl. Es ist sofort ersichtlich, dass eine endgültige Anpassung des aus dem Kegelreibringgetriebe 1 ausgehenden Drehmomentes in einem dem Kegelreibringgetriebe 1 nachfolgenden Differentialgetriebe erfolgen kann. Die genannte endgültige Anpassung des ausgehenden Drehmomentes muss jedoch nicht notwendigerweise mit demselben Faktor belegt sein wie die eingangsseitige Drehmomentwandlung über die Zahnradgetriebe 13, 23.

In der dargestellten Ausführungsform weisen jeweils kegelseitige Zahnräder der beiden Zahnradgetriebe etwa einen halben Durchmesser eines wellenseitigen Zahnrades, angeordnet an der gemeinsamen Welle 3, auf. Die Zähnezahlen zweier innerhalb eines Zahnradgetriebes im Eingriff befindlicher Zahnräder entsprechen jedoch nicht genau der zweifachen bzw. der halben Zähnezahl des jeweils anderen Zahnrades. Zur Erzeugung eines besseren Verschleißbildes ist die Zähnezahl eines der beiden Zahnräder innerhalb eines Zahnradgetriebes 13, 23 um einen Zahn verringert bzw. erhöht. Diese Ausgestaltung bewirkt stets unterschiedliche Paarungen zweier Zähne während des Eingriffes.

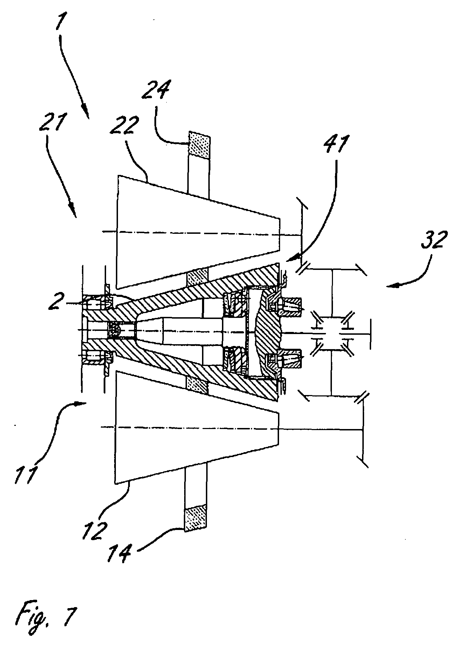

Eine vorzugsweise ergänzend aber auch alternativ zu den Anpresskraftausgleichen nach Figuren 5 und 6 einsetzbare Einrichtung zur Aufbringung einer Anpresskraft zwischen den Reibringen 14, 24 und den Kegeln 2, 12, 22 zeigt Figur 7. Es wird dabei eine gemeinsame Anpresseinheit 41 am gemeinsamen Kegel 2 verwendet, so dass die für die Kraftübertragung zwischen den jeweiligen Kegeln 12, 22 und dem gemeinsamen Kegel 2 erforderliche Anpresskraft durch diese einzelne gemeinsame Anpresseinheit 41 und nicht durch die Verwendung zweier getrennter Anpresseinheiten aufgebracht wird. Die dargestellte Anordnung mit einer gemeinsamen Anpresseinheit 41 ermöglicht es, die Montage des Kegelreibringgetriebes 1 durch den Wegfall montageintensiver Baugruppen zu vereinfachen. Ferner ist durch diese Anordnung die Möglichkeit gegeben, die Anpresseinheit 41 selbst konstruktiv derart auszuführen, dass keine weiteren Bauteile für einen Kräfteausgleich zwischen den weiteren Kegeln 12, 22 der beiden Teilgetrieben 11, 21 erforderlich ist, da die Anpresseinheit 41 bereits auf beide weiteren Kegel 12, 22 ohne weitere Hilfsmittel gleichermaßen wirkt.

Die Anpresseinheit 41 bringt eine zur Kraftübertragung erforderliche Anpresskraft wenigstens über zwei nicht bezifferte Tellerfedern einer ersten Teilanpresseinrichtung auf, wobei die Anpresskraft im gesamten Betriebsbereich des Kegelreibringgetriebes 1 zunächst konstant ist. Zusätzlich zu dieser konstanten Grundlast kann die dargestellte nicht bezifferte zweite Teilanpresseinheit mittels eines Wälzkörpers und einer Auflauframpe, auf welcher der ebenfalls nicht bezifferte Wälzkörper wälzt, eine drehmomentabhängige Anpresskraft erzeugen. Somit ist die dargestellte Anpresseinheit 41 vorteilhaft bei stark variierenden Eingangsdrehmomenten einsetzbar. Insbesondere kann über die Anpresseinheit 41 ggf. unmittelbar ein Drehmoment gemessen und für die vorstehend beschriebenen Regelungen verwendet werden, indem die Verlagerung der verschiedenen Baugruppen der Anpresseinheit 41 zur Erzeugung eines entsprechenden Messsignals genutzt wird.

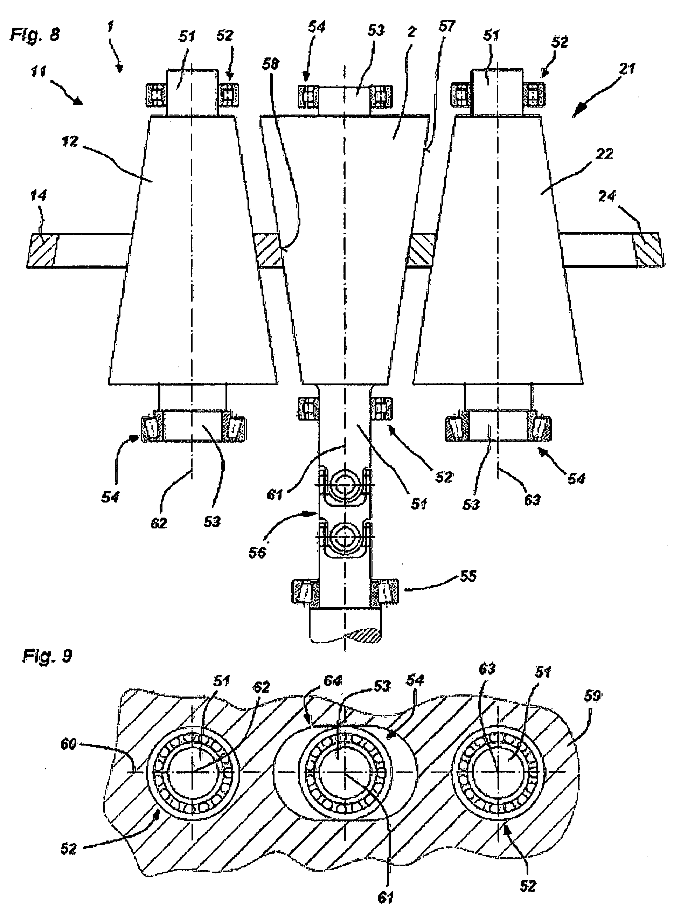

Das Kegelreibringgetriebe 1 nach Figur 8 verfügt über eine aus zwei Kreuzgelenken bestehende Wellenkupplung 56, welche Versetzungen der Rotationsachse 61 des gemeinsamen Kegels 2 folgt und diese auch ermöglicht. Der Wellenkupplung 56 ist die Welle 51 des gemeinsamen Kegels 2 angeschlossen, wobei diese Welle 51 durch ein wellenseitiges Reibkegel-Lager 52 im Kegelreibringgetriebe 1 gelagert ist. Auf der diesem wellenseitigen Reibkegel-Lager 52 abgewandten Seite des gemeinsamen Kegels 2 ist ein absatzseitiges Reibkegel-Lager 54 vorgesehen, welches den gemeinsamen Kegel 2 an einem Absatz 53 in einem Gehäuse des Kegelreibringgetriebes 1 lagert. In einer ähnlichen Art und Weise sind die beiden weiteren Kegel 12, 22 ebenfalls im Kegelreibringgetriebe 1 gelagert, wobei jeder der beiden weiteren Kegel 12, 22 über eine Welle 51 und einen Absatz 53 verfügt, welche weiterhin zur Lagerung mittels des wellenseitigen Reibkegel-Lagers 52 und des absatzseitigen Reibkegel-Lagers 54 herangezogen werden. Beide weiteren Kegel 12, 22 werden durch ihren jeweiligen Reibring 14, 24 umschlossen und übertragen mittels diesem Reibring 14, 24 einen Drehmoment auf den gemeinsamen Kegel 2.

Die beiden Lagerungen des gemeinsamen Kegels 2, das wellenseitige Reibkegel-Lager 52 und das absatzseitige Reibkegel-Lager 54, bilden in dieser Ausführungsform nach Figur 8 jeweils ein Loslager, wodurch ein axialer Wellenversatz entlang der Rotationsachse 61 des gemeinsamen Kegels 2 beliebig erfolgen kann. Die Einspannung in axialer Richtung erfolgt erst vom gemeinsamen Kegel 2 aus gesehen hinter der Wellenkupplung 56 an dem Führungslager 55. Das Führungslager 55 ist in diesem Ausführungsbeispiel als ein Kegelrollenlager ausgeführt und stützt die axialen Kräfte an einem an der Welle 51 befindlichen Absatz ab. Im Gegensatz hierzu weisen die beiden weiteren Kegel 12, 22 der beiden Teilgetriebe 11, 21 eine im Stand der Technik übliche Festloslagerung mit einem Kegelrollenlager als absatzseitiges Reibkegel-Lager 54 und einem Zylinderrollenlager als wellenseitiges Reibkegel-Lager 52 auf.

Das Ausführungsbeispiel nach Figur 8 ermöglicht insbesondere durch die beiden Loslager des gemeinsamen Kegels 2, durch dessen wellenseitiges Reibkegel-Lager 52 und dessen absatzseitiges Reibkegel-Lager 54, einen translatorischen Versatz und auch einen rotatorischen Versatz des gemeinsamen Kegels 2, in dem beide Reibkegel-Lager 52, 54 des Kegels 2 jeweils einen Freiheitsgrad in Richtung der Rotationsachsen 52, 53 des ersten weiteren Kegels 12 und des zweiten weiteren Kegels 22 aufweisen. In einem nicht dargestellten Ausführungsbeispiel kann aber auch auf das Führungslager 55 verzichtet werden und eines der beiden Reibkegel-Lager 52, 54 durch ein winkelbewegliches Lager, etwa ein Tonnenlager oder ein Pendelkugellager, ersetzt werden. Ein derartiges Ausführungsbeispiel ermöglicht die Lagerung des gemeinsamen Kegels 2 ähnlich der im Stand der Technik bekannten Art und Weise, wobei die translatorische Bewegungsfreiheit des jeweils anderen Reibkegel-Lagers, des Loslagers, durch die Winkelbeweglichkeit des Festlagers erhalten bleibt. Insofern stellt ein Ausführungsbeispiel mit einem drehbeweglichen Lager als Reibkegel-Lager einen gemeinsamen Kegel mit lediglich einem Freiheitsgrad, einem Rotationsfreiheitsgrad, zur Verfügung.

Ein gemeinsamer Kegel mit zwei Freiheitsgraden, wobei die Rotationsachse 61 des gemeinsamen Kegels 2 auch parallel zu den beiden weiteren Rotationsachsen 62, 63 des ersten und des zweiten weiteren Kegels geführt werden kann, führt auch stets zu einer Parallelität der Kegeloberfläche 57 mit Kegeloberflächen der beiden weiteren Kegel 12, 22. In einer derartigen Ausführungsform, wie sie auch in Figur 8 dargestellt ist, ist eine Ringkontaktoberfläche 58 eines Reibringes 14, 24 des ersten oder des zweiten Teilgetriebes 11, 21 mit einer wenigstens in einem Querschnitt als Gerade ausgeführten Oberfläche ausgestattet. Dies bewirkt, wie sofort ersichtlich, einen linienförmigen Kontakt zwischen der Ringkontaktoberfläche 58 und der Kegeloberfläche 57. Wird anstatt eines Kegels 2 mit einer Los-Los-Lagerung ein gemeinsamer Kegel 2 mit einer Fest-Los-Lagerung verwendet, so verfügt der gemeinsame Kegel 2, wie vorstehend bereits erläutert, lediglich über einen Rotationsfreiheitsgrad anstatt eines Rotationsfreiheitsgrades und eines zusätzlichen Translationsfreiheitsgrads. Diese Einschränkung in den Freiheitsgraden des gemeinsamen Kegels 2 führt jedoch dazu, dass die Kegeloberfläche 57 nicht mehr parallel zu den Oberflächen der weiteren Kegel 12, 22 geführt werden kann. Folglich ist es in gewisser Weise problematisch, auch die Ringkontaktoberfläche 58 der beiden Reibringe 14, 24 nicht mehr eben, zumindest in einem Querschnitt eben, auszuführen. Eine ballig ausgeführte Ringkontaktoberfläche, also eine Kontaktfläche, welche zumindest in der Achsenebene eine konvexe Krümmung aufweist, kann den Winkelversatz des gemeinsamen Kegels 2 ausgleichen. Es kommt dabei nicht zu einer unzulässig hohen Kantenpressung an einem der beiden Reibringe 14,24.

Wie sofort ersichtlich, kann ein nach der Figur 8 ausgeführtes Kegelreibringgetriebe mit einem beweglichen gemeinsamen Kegel 2 auch derart ausgeführt sein, dass die weiteren Kegel 12, 22 oder wenigstens einer dieser beiden weiteren Kegel 12, 22 als beweglicher Kegel ausgeführt ist. Es ist allerdings sofort ersichtlich, dass ein beweglicher gemeinsamer Kegel 2 eine durch eine in diesem gemeinsamen Kegel 2 aufgebrachten Anpresseinrichtung in der Lage ist, ungleichmäßige Kontaktkräfte an den beiden Reibringen 14, 24 auszugleichen.

Das absatzseitige Reibkegel-Lager 54 des gemeinsamen Kegels 2 ist in einer horizontal ausgeführten Kegelführung 64 nach Figur 9 angeordnet. Diese Führung 64 ermöglicht ein Wandern des Reibkegel-Lagers, in diesem Fall des absatzseitigen Reibkegel-Lagers 54, entlang einer Achsenebene 60, welche durch die Rotationsachsen 62, 63 der beiden weitem Kegel 12, 22 und durch die Rotationsachse 61 des gemeinsamen Kegels 2 aufgespannt wird. Der Begriff "horizontal" bezeichnet in diesem Falle eine Richtung innerhalb der Achsenebene, wobei "vertikal" eine Bewegungsrichtung lotrecht zur Achsenebene 60 bedeuten würde.

In dem Ausführungsbeispiel nach Figur 9 ist die Lagerführung 64 als Langloch mit einer Ausrichtung zur Achseneben 60 ausgeführt. Es ist hierbei auch denkbar, dass die Lagerführung 64 eine Aufnahme oder Fassung für einen Außenring des absatzseitigen Reibkegel-Lagers 54 aufweist und somit die Lagerführung 64 selbst als ein Schlitten innerhalb eines Gehäuses 59 des Kegelringgetriebes 1 angeordnet ist. Die Verwendung eines separaten Bauteils als Schlitten für eine Lagerführung 64 ermöglicht ferner ein besseres Einspannen des jeweils verwendeten Reibkegel-Lagers und eine Entkopplung der translatorischen Führung des gemeinsamen Kegels 2 innerhalb der Achsenebene 60 und der rotatorischen Lagerung des gemeinsamen Kegels 2 durch das jeweilige Reibkegel-Lager.

Wird auf eine Anpresseinrichtung innerhalb des gemeinsamen Kegels 2 verzichtet, ist es alternativ zu der vorstehend beschriebenen Ausführungsform auch denkbar, dass zwei Reibkegel-Lager der beiden weiteren Kegel 12, 22 eine Reibkegel-Lagerführung 64 aufweisen, wobei in solch einem Ausführungsbeispiel diese Lagerführungen 64 auch mit Anpresseinrichtungen ausgestattet werden können, um die beiden weiteren Kegel 12, 22 in Richtung des gemeinsamen Kegels 2 mittels eines Kraft zu verspannen.

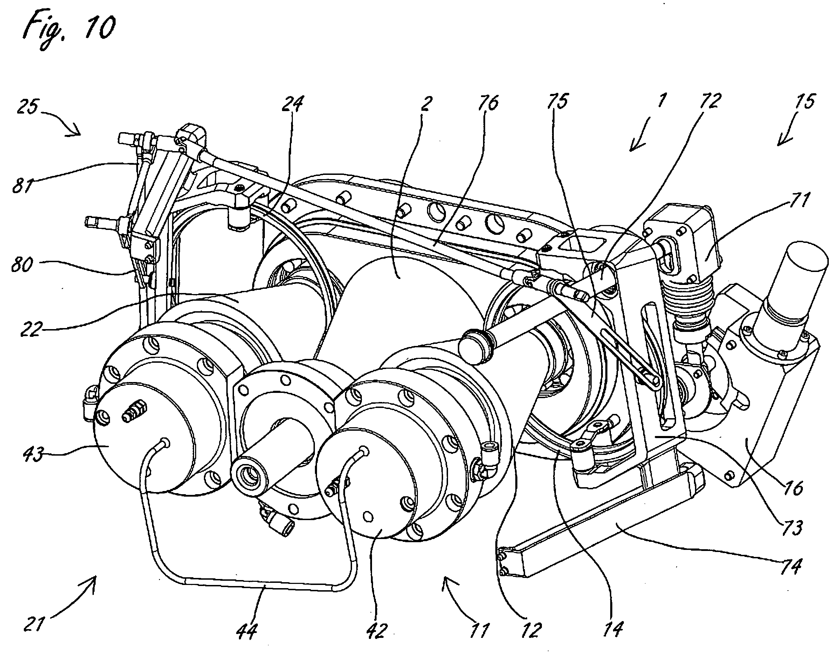

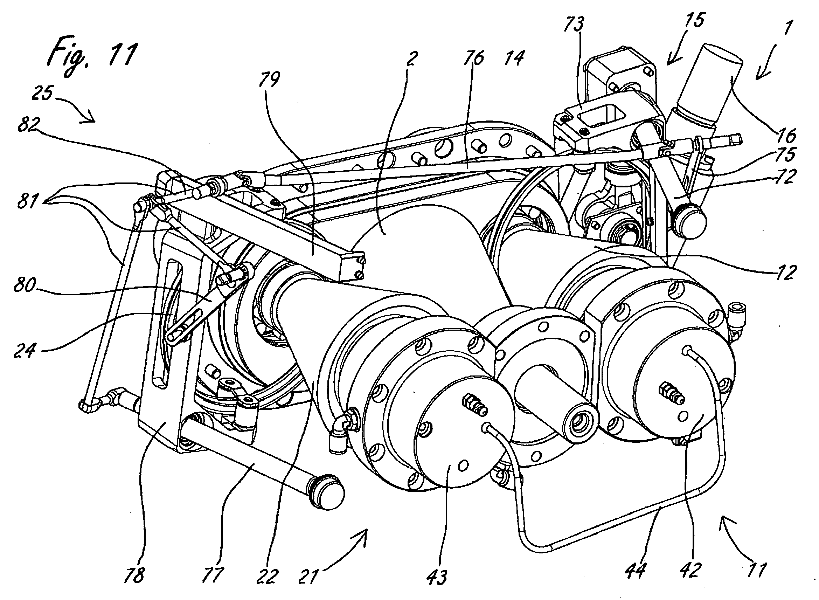

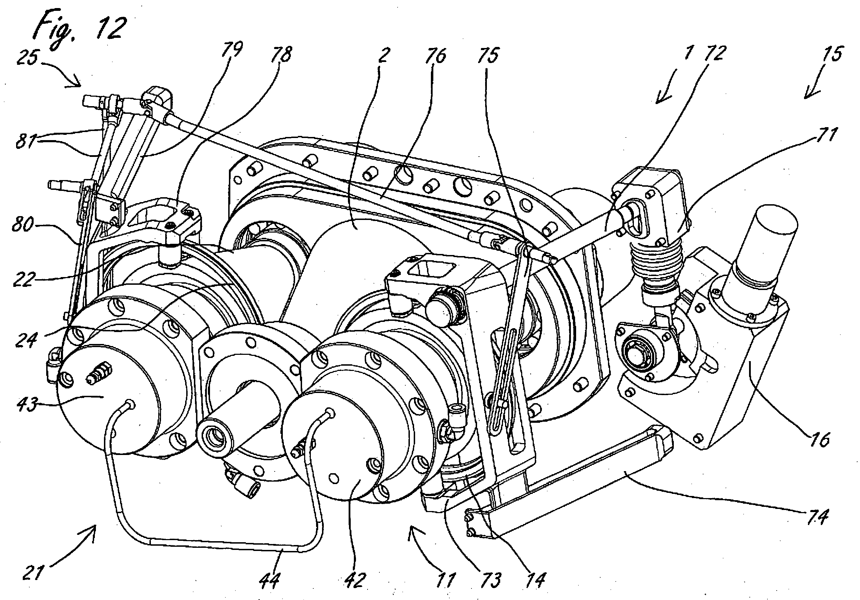

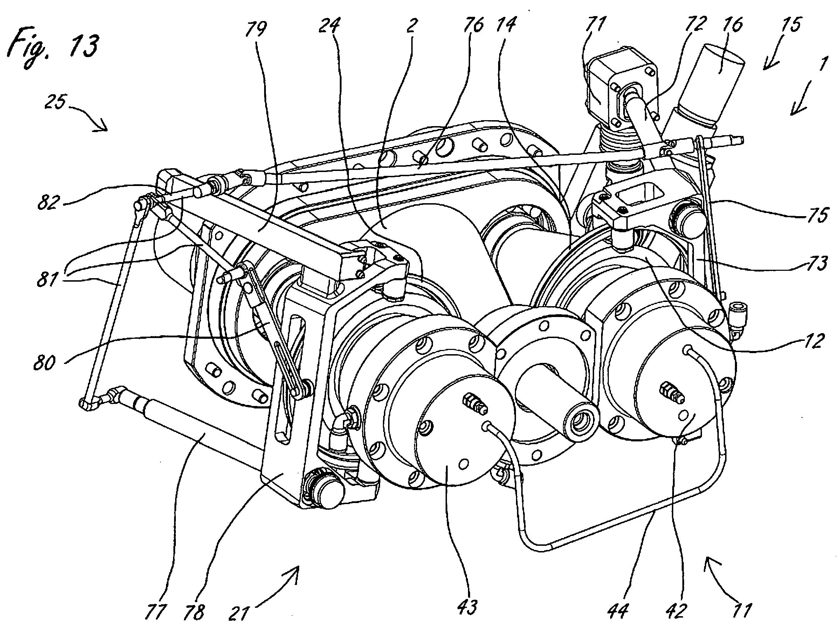

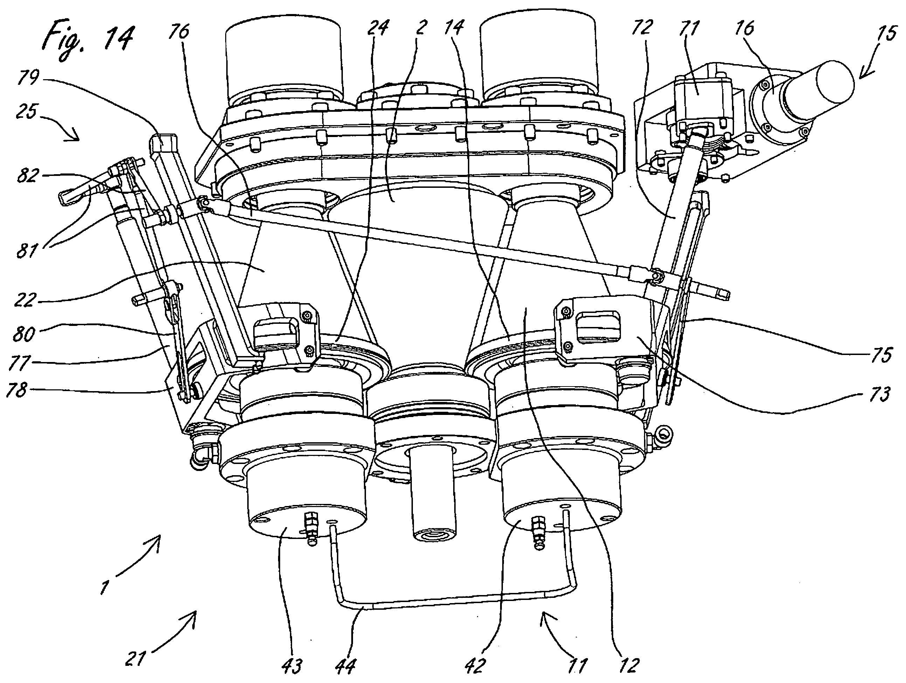

Statt einer elektronischen Ansteuerung beider Verstelleinrichtungen 15, 25 kann die Ansteuerung bzw. Regeleung des zweiten Teilgetriebes 21 auch mechanisch erfolgen, wie anhand der in Figuren 10 bis 15 dargestellten Ausführungsbeispiel exemplarisch erläutert. Hierbei erfolgt vorzugsweise die Ansteuerung bzw. Regelung des ersten Teilgetriebes 11 in an sich bekannter Weise, so dass hier insbesondere auf an sich bekannte Einrichtungen zurückgegriffen werden kann. So kann beispielsweise der Stellmotor 16 über eine Getriebeanordnung 71 einen Käfig 72 in einem Anstellwinkel verlagern, der seinerseits über eine Verstellbrücke 73, die an diesem Käfig und einer Drehsicherung 74 axial verschiebbar gelagert ist, den Reibring 14 in seinem Anstellwinkel verlagern, so dass dieser von sich aus und aufgrund der Rotation der Kegel 2, 12 entsprechend wandert. Alternativ kann der Käfig 72 auch als zweiachsiger Käfig oder sonstwie ausgeführt sein, solang er die Verstellbrücke axial entsprechend führt und eine Winkeleinstellung ermöglicht. Ebenso kann die Drehsicherung 72 auch durch eine zweite Führungsstange oder in der ersten Führungsstange des Käfigs 72 umgesetzt werden. Auch ist es nicht zwingend erforderlich, die Verstellbrücke 73 brückenartig auszubilden, solange diese eine ausreichend stabile Führung und Winkeleinstellung gewährleistet.

Über einen mechanischen Positionsnehmer 75, der ggf. auch zur Messwertaufnahme beispielsweise über ein Potentiometer genutzt werden kann, wird bei diesem Ausführungsbeispiel die Position der Verstellbrücke 73 an die zweite Verstelleinrichtung 25 mittels eines Übertragungsstange 76 übertragen.

Auch die zweite Verstelleinrichtung 25 verfügt über einen Käfig 77, der in an sich bekannter Weise eine Verstellbrücke 78 mittels einer Drehsicherung 79 axial verschiebbar lagert und eine Winkeleinstellung des von der Verstellbrücke 78 gelagerten Reibrings 24 sowie ein freies Folgen der Verstellbrücke 78 einer axialen Wanderung des Reibrings 24 ermöglicht. Allerdings wird der Käfig 77 über ein Rückkopplungsgestänge 81 angesteuert, welches einerseits einen Positionsnehmer 80 und andererseits eine Steuerstange 82 umfasst und derart ausgerichtet ist, dass über die Steuerstange 82 eine axiale Position des Reibrings 24 vorgegeben werden kann, die dann durch die mechanische Rückkopplung des Rückkopplungsgestänges 81 von dem Positionsnehmer 80 angesteuert angefahren wird.

Hierbei ist die Übertragungsstange 76 mit der Steuerstange 82 gekoppelt, so dass die mechanisch ermittelte Position der Verstellbrücke 73 und mithin des Reibrings 14 als Führungsgröße der zweiten Verstelleinrichtung 25 dient.

Im Übrigen sind identisch wirkende Baugruppen des in Figuren 10 bis 14 dargestellten Ausführungsbeispiels aus identisch beziffert, so dass zur Vermeidung von Wiederholungen auf eine erneute Beschreibung derselben an dieser Stelle verzichtet und auf die vorstehenden Erläuterungen verwiesen wird.

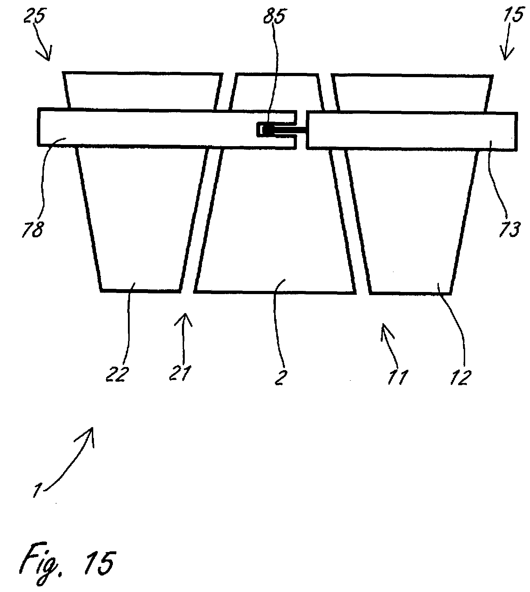

Hierbei müssen die Verstelleinrichtungen 15, 25 nicht zwingend an der jeweils dem Kegel 2 abgewandten Seite der Kegel 12, 22 vorgesehen sein. Vielmehr ist es denkbar, die Verstelleinrichtungen 15, 25 oberhalb oder unterhalb der im Wesentlichen in einer Ebene angeordneten Kegel 2, 12, 22 vorzusehen, wie diese in Figur 15 exemplarisch dargestellt ist. Hierdurch lässt sich die mechanische Kopplung ggf. erheblich vereinfachen.

Bei dem in Figur 15 dargestellten Ausführungsbeispiel ist dementsprechend ebenfalls eine mechanische Kopplung der beiden Verstelleinrichtungen 15, 25 vorgesehen, wobei die Verstellbrücke 73 der Verstelleinrichtung 15 in an sich bekannter Weise geregelt wird, während die Verstellbrücke 78 der Verstelleinrichtung 25 als folgende Verstelleinrichtung ausgebildet ist, indem ein nicht dargestellter Käfig der Verstelleinrichtung 25 in an sich bereits vorstehend beschriebener Weise eine axiale Verlagerung der Verstellbrücke 78 ermöglicht, jedoch abweichend von dem vorstehend beschriebenen Ausführungsbeispiel eine Winkellage nicht vorgibt sondern einer von der Verstellbrücke 78 vorgegebenen Winkellage frei folgen kann.

Durch eine Dreh-Schiebe-Verbindung 85 zwischen den beiden Verstellbrücken 73, 78 wird die Verstellbrücke 78 verkippt, wenn diese eine von der Axiallage der Verstellbrücke 73 abweichende Axiallage aufweist. Dieser Verkippung folgt der Käfig der Verstelleinrichtung 25 entsprechend, wie vorstehend beschrieben, so dass der Reibring entsprechend der Winkellage nachwander kann, bis der Winkel wieder auf Null eingeregelt ist. Wird somit die Verstellbrücke 73 verlagert, folgt die Verstellbrücke 78 bzw. der entsprechende Reibring dieser Verlagerung.

Die Dreh-Schiebe-Verbindung 85 ist bei diesem Ausführungsbeispiel durch eine Nut in der Verstellbrücke 78 gebildet, in die eine runde Feder der Verstellbrücke 73 eingreift, gebildet. Prinzipiell lässt eine derartige Anordnung aus länglicher Nut und runder Kulisse in nahezu beliebiger Weise zu einer Dreh-Schiebe-Verbindung umsetzen, wobei letztlich auch komplexere Kopplungen bis zu der Kopplung entsprechend des vorstehend beschriebenen Ausführungsbeispiels denkbar sind.

**Bezugszeichenliste:**

| | | | |
|---|---|---|---|
| 1 | Kegelreibringgetriebe | 32 | zweites leistungsverzweigtes |
| 2 | gemeinsamer Kegel | | Ausgleichsgetriebe |
| 3 | gemeinsame Welle | 33 | drittes leistungsverzweigtes |
| 4 | Drehzahlsensor | | Ausgleichsgetriebe |
| 5 | Führungsrädchen | 41 | gemeinsame Anpresseinheit |
| 11 | erstes Teilgetriebe | 42 | erste Anpresseinheit |
| 12 | weiterer Kegel des ersten | 43 | zweite Anpresseinheit |
| | Teilgetriebes | 44 | hydraulischer Kräfteausgleich |
| 13 | erstes Zahnradgetriebe | 45 | erste Druckkammer |
| 14 | Reibring des ersten Teilgetriebes | 46 | zweite Druckkammer |
| 15 | Verstelleinrichtung des Reibringes | 47 | mechanischer Kräfteausgleich |
| | des ersten Teilgetriebes | 48 | Drehpunkt |
| 16 | erster Stellmotor | 51 | Welle |
| 17 | erste Teilregeleinrichtung | 52 | wellenseitiges Reibkegel-Lager |
| 18 | erste Führungsgröße | 53 | Absatz |
| 19 | erste Stellgröße | 54 | absatzseitiges Reibkegel-Lager |
| 20 | erste Regelgrößenerfassung | 55 | Führungslager |
| 21 | zweites Teilgetriebe | 56 | Wellenkupplung |
| 22 | weiterer Kegel des zweiten | 57 | Kegeloberfläche |
| | Teilgetriebes | 58 | Ringkontaktoberfläche |
| 23 | zweites Zahnradgetriebe | 59 | Gehäuse |
| 24 | Reibring des zweiten Teilgetriebes | 60 | Achsenebene |
| 25 | Verstelleinrichtung des Reibringes | 61 | Rotationsachse des gemeinsamen |
| | des zweiten Teilgetriebes | | Kegels |
| 26 | zweiter Stellmotor | 62 | Rotationsachse des ersten weiteren |
| 27 | zweite Teilregeleinrichtung | | Kegels |
| 28 | zweite Führungsgröße | 63 | Rotationsachse des zweiten weiteren |
| 29 | zweite Stellgröße | 60 | Kegels |
| 30 | zweite Regelgrößenerfassung | 64 | Lagerführung |
| 31 | erstes leistungsverzweigtes | 71 | Getriebeanordnung |
| | Ausgleichsgetriebe | 72 | Käfig |
| 73 | Verstellbrücke | 79 | Drehsicherung |
| 74 | Drehsicherung | 80 | Positionsnehmer |
| 75 | Positionsnehmer | 81 | Rückkopplungsgestänge |
| 76 | Übertragungsstange | 82 | Steuerstange |
| 77 | Käfig | 85 | Dreh-Schiebe-Verbindung |
| 78 | Verstellbrücke | | |

## Patentansprüche

1. Kegelreibringgetriebe (1) bestehend aus wenigstens zwei als Kegelreibringgetriebe mit einem gemeinsamen Kegel (2) und jeweils einem weiteren Kegel (12, 22) ausgeführten Teilgetrieben (11, 21), welche eine erste Verstelleinrichtung (15) für einen Reibring (14) des ersten Teilgetriebes (11) und eine zweite Verstelleinrichtung (25) für einen Reibring (24) des zweiten Teilgetriebes (21) aufweisen, wobei der weitere Kegel (12) des ersten Teilgetriebes (11) mittels eines ersten Getriebes (13) mit einer Welle (3) wirkverbunden ist und der weitere Kegel (22) des zweiten Teilgetriebes (21) mittels eines zweiten Getriebes (23) ebenfalls mit dieser Welle (3) wirkverbunden ist, wobei das erste und das zweite Getriebe (13, 23) ein identisches Übersetzungsverhältnis aufweisen und/oder die beiden weiteren Kegel (12, 22) drehzahlsynchron mit der gemeinsamen Welle (3) wirkverbinden und wobei das Kegelreibringgetriebe (1) eine Regeleinrichtung für eine Regelung einer axialen Position der Reibringe (14, 24) aufweist, **dadurch gekennzeichnet, dass** die Regeleinrichtung wenigstens eine erste Teilregeleinrichtung (17) mit einer ersten Führungsgröße (18) und eine zweite Teilregeleinrichtung (27) mit einer von der ersten Führungsgröße (18) separaten zweiten Führungsgröße (28) aufweist, wobei das erste Teilgetriebe (11) die erste Teilregeleinrichtung (17) für die Regelung der Position des Reibringes des ersten Teilgetriebes (11) aufweist und das zweite Teilgetriebe (21) wenigstens die zweite Teilregeleinrichtung (27) für die Regelung der Position des Reibringes (24) des zweiten Teilgetriebes (21) aufweist.

2. Kegelreibringgetriebe (1) nach Anspruch 1, **dadurch gekennzeichnet, dass** eine Regelgröße der ersten Teilregeleinrichtung (17) eine Führungsgröße (28) der zweiten Teilregeleinrichtung (27) ist.

3. Kegelreibringgetriebe (1) nach Anspruch 2, **dadurch gekennzeichnet, dass** die Führungsgröße (18) der ersten Teilregeleinrichtung (17) eine Führungsgröße der zweiten Teilregeleinrichtung (27) ist.

4. Kegelreibringgetriebe (1) nach einem der vorstehenden Ansprüche, **dadurch gekennzeichnet, dass** die Führungsgröße der zweiten Teilregeleinrichtung (27) eine über ein Position-Offset-Kennfeld korrigierte Führungsgröße (18) der ersten Teilregeleinrichtung (17) ist.

5. Kegelreibringgetriebe (1) nach einem der vorstehenden Ansprüche, **dadurch gekennzeichnet, dass** der gemeinsame Ausgangskegel (2) eine Anpresseinrichtung (41) aufweist.

6. Verfahren für ein Kegelreibringgetriebe (1) mit wenigstens zwei als Kegelreibringgetriebe ausgeführten Teilgetrieben (11, 21), welche eine erste Verstelleinrichtung (15) für einen Reibring (14) des ersten Teilgetriebes (11) und eine zweite Verstelleinrichtung (25) für einen Reibring (24) des zweiten Teilgetriebes (21) aufweisen, wobei eine axiale Position der Reibringe (14, 24) über eine Regeleinrichtung geregelt wird, **dadurch gekennzeichnet, dass** die Regeleinrichtung wenigstens eine erste Teilregeleinrichtung (17) mit einer ersten Führungsgröße (18) und eine zweite Teilregeleinrichtung (27) mit einer von der ersten Führungsgröße (18) separaten zweiten Führungsgröße (28) aufweist, wobei die Position des Reibringes (14) des ersten Teilgetriebes (11) über die erste Teilregeleinrichtung (17) und die Position des Reibringes (24) des zweiten Teilgetriebes (21) über die zweite Teilregeleinrichtung (27) geregelt wird und eine Regelgröße der ersten Teilregeleinrichtung (17) eine Führungsgröße (28) der zweiten Teilregeleinrichtung (27) ist und/oder wobei die zweite Führungsgröße (28) über eine Korrektur der ersten Führungsgröße (18) über ein Position-Offset-Kennfeld erzeugt wird und das Position-Offset-Kennfeld durch eine Kalibriermessung von Abweichungen der axialen Position des ersten und des zweiten Reibringes (14, 24) erzeugt wird.

7. Verfahren für ein Kegelreibringgetriebe nach Anspruch 6, **dadurch gekennzeichnet, dass** die Kalibriermessung vor einer Inbetriebnahme des Kegelreibringgetriebes (1) erfolgt.

## Claims

1. A bevel friction ring gear mechanism (1), consisting of at least two part gear mechanisms (11, 21) in the form of bevel friction ring gear mechanisms having a common cone (2) and in each case one further cone (12, 22), which part gear mechanisms have a first adjustment device (15) for a friction ring (14) of the first part gear mechanism (11) and a second adjustment device (25) for a friction ring (24) of the second part gear mechanism (21), the further cone (12) of the first part gear mechanism (11) being operatively connected to a shaft (3) by means of a first gear mechanism (13), and the further cone (22) of the second part gear mechanism (21) likewise being operatively connected to said shaft (3) by means of a second gear mechanism (23), the first and second gear mechanisms (13, 23) having an identical gear ratio and/or the two further cones (12, 22) being operatively connected to the common shaft (3) in a speed-synchronous manner, and the bevel friction ring gear mechanism (1) having a control device for controlling an axial position of the friction rings (14, 24), **characterised in that** the control device has at least one first part control device (17) having a first reference variable (18) and a second part control device (27) having a second reference variable (28) separate from the first reference variable (18), wherein the first part gear mechanism (11) has the first part control device (17) for controlling the position of the friction ring of the first part gear mechanism (11), and the second part gear mechanism (21) has at least the second part control device (27) for controlling the position of the friction ring (24) of the second part gear mechanism (21).

2. The bevel friction ring gear mechanism (1) according to Claim 1, **characterised in that** a control variable of the first part control device (17) is a reference variable (28) of the second part control device (27).

3. The bevel friction ring gear mechanism (1) according to Claim 2, **characterised in that** the reference variable (18) of the first part control device (17) is a reference variable of the second part control device (27).

4. The bevel friction ring gear mechanism (1) according to any one of the preceding claims, **characterised in that** the reference variable of the second part control device (27) is a reference variable (18) of the first part control device (17) that is corrected by means of a position-offset characteristic diagram.

5. The bevel friction ring gear mechanism (1) according to any one of the preceding claims, **characterised in that** the common output cone (2) has a contact pressure device (41).

6. A method for a bevel friction ring gear mechanism (1) having at least two part gear mechanisms (11, 21) in the form of bevel friction ring gear mechanisms, which part gear mechanisms have a first adjustment device (15) for a friction ring (14) of the first part gear mechanism (11) and a second adjustment device (25) for a friction ring (24) of the second part gear mechanism (21), an axial position of the friction rings (14, 24) being controlled by means of a control device, **characterised in that** the control device has at least one first part control device (17) having a first reference variable (18) and a second part control device (27) having a second reference variable (28) separate from the first reference variable (18), wherein the position of the friction ring (14) of the first part gear mechanism (11) is controlled by means of the first part control device (17) and the position of the friction ring (24) of the second part gear mechanism (21) is controlled by means of the second part control device (27), and a control variable of the first part control device (17) is a reference variable (28) of the second part control device (27) and/or wherein the second reference variable (28) is generated by correction of the first reference variable (18) by means of a position-offset characteristic diagram, and the position-offset characteristic diagram is generated by a calibration measurement of differences in the axial position of the first and second friction rings (14, 24).

7. A method for a bevel friction ring gear mechanism according to Claim 6, **characterised in that** the calibration measurement takes place before commissioning of the bevel friction ring gear mechanism (1).

## Revendications

1. Transmission à roues à friction coniques (1) composée d'au moins deux transmissions partielles (11, 21) conçues en tant que transmissions à roues à friction coniques comprenant un cône (2) commun et respectivement un cône supplémentaire (12, 22), lesquelles présentent un premier dispositif de déplacement (15) pour une roue à friction (14) de la première transmission partielle (11) et un second dispositif de déplacement (25) pour une roue à friction (24) de la seconde transmission partielle (21), sachant que le cône supplémentaire (12) de la première transmission partielle (11) coopère avec un arbre (3) au moyen d'une première transmission (13) et le cône supplémentaire (22) de la seconde transmission partielle (21) coopère également avec cet arbre (3) au moyen d'une seconde transmission (23), sachant que les première et seconde transmissions (13, 23) présentent un rapport de translation identique et/ou les deux cônes supplémentaires (12, 22) coopèrent en régime synchrone avec l'arbre commun (3) et sachant que la transmission à roues à friction coniques (1) présente un dispositif de réglage pour régler une position axiale des roues à friction (14, 24), **caractérisée en ce que** le dispositif de réglage présente au moins un premier dispositif de réglage partiel (17) avec une première grandeur de guidage (18) et un second dispositif de réglage partiel (27) avec une seconde grandeur de guidage (28) séparée de la première grandeur de guidage (18), sachant que la première transmission partielle (11) présente le premier dispositif de réglage partiel (17) pour régler la position de la roue à friction de la première transmission partielle (11) et la seconde transmission partielle (21) présente au moins le second dispositif de réglage partiel (27) pour régler la position de la roue à friction (24) de la seconde transmission partielle (21).

2. Transmission à roues à friction coniques (1) selon la revendication 1, **caractérisée en ce qu'**une grandeur de réglage du premier dispositif de réglage partiel (17) est une grandeur de guidage (28) du second dispositif de réglage partiel (27).

3. Transmission à roues à friction coniques (1) selon la revendication 2, **caractérisée en ce que** la grandeur de guidage (18) du premier dispositif de réglage partiel (17) est une grandeur de guidage du second dispositif de réglage partiel (27).

4. Transmission à roues à friction coniques (1) selon l'une des revendications précédentes, **caractérisée en ce que** la grandeur de guidage du second dispositif de réglage partiel (27) est une grandeur de guidage (18) du premier dispositif de réglage partiel (17) corrigée par un diagramme caractéristique de décalage de position.

5. Transmission à roues à friction coniques (1) selon l'une des revendications précédentes, **caractérisée en ce que** le cône de départ commun (2) présente un dispositif de serrage (41).

6. Procédé destiné à une transmission à roues à friction coniques (1) comprenant au moins deux transmissions partielles (11, 21) conçues en tant que transmissions à roues à friction coniques, lesquelles présentent un premier dispositif de déplacement (15) pour une roue à friction (14) de la première transmission partielle (11) et un second dispositif de déplacement (25) pour une roue à friction (24) de la seconde transmission partielle (21), sachant qu'une position axiale des roues à friction (14, 24) peut être réglée par un dispositif de réglage, **caractérisé en ce que** le dispositif de réglage présente au moins un premier dispositif de réglage partiel (17) avec une première grandeur de guidage (18) et un second dispositif de réglage partiel (27) avec une seconde grandeur de guidage (28) séparée de la première grandeur de guidage (18), sachant que la position de la roue à friction (14) de la première transmission partielle (11) est réglée par le premier dispositif de réglage partiel (17) et la position de la roue à friction (24) de la seconde transmission partielle (21) est réglée par le second dispositif de réglage partiel (27) et une grandeur de réglage du premier dispositif de réglage partiel (17) est une grandeur de guidage (28) du second dispositif de réglage partiel (27) et/ou sachant que la seconde grandeur de guidage (28) est produite par une correction de la première grandeur de guidage (18) par un diagramme caractéristique de décalage de position, et le diagramme caractéristique de décalage de position est produit par une mesure de calibrage des écarts de position axiale des première et seconde roues à friction (14, 24).

7. Procédé destiné à une transmission à roues à friction coniques selon la revendication 6, **caractérisé en ce que** la mesure de calibrage est effectuée avant une mise en service de la transmission à roues à friction coniques (1).
